# EUROPEAN PATENT SPECIFICATION

(11) **EP 0 456 029 B1**
(45) Date of publication and mention of the grant of the patent: **14.12.1994**
(21) Application number: 91106472.3
(22) Date of filing: 23.04.1991
(51) Int. Cl.: G01L 11/00

(54) **Vibrating type pressure measuring device**
Druckaufnehmer mit schwingendem Element
Transducteur de pression à élément vibrant

(30) Priority: 10.05.1990 JP 120987/90; 11.05.1990 JP 121489/90; 14.05.1990 JP 123791/90; 10.07.1990 JP 182064/90; 29.03.1991 JP 19823/91 U
(43) Date of publication of application: 13.11.1991
(73) Proprietor: Yokogawa Electric Corporation, Tokyo 180 (JP)
(72) Inventor: Ikeda, Kyoichi, Tachikawa-shi, Tokyo, 190 (JP); Watanabe, Tetsuya, Musashino-shi, Tokyo 180 (JP); Kudo, Takahiro, Tokyo 125 (JP); Fujita, Akio, Chofu-shi, Tokyo, 182 (JP); Tsukamoto, Hideo, Mitaka-shi, Tokyo, 181 (JP); Kohno, Nobuaki, Musashino-shi, Tokyo, 180 (JP); Kuwayama, Hideki, Higashi-Murayama-shi, Tokyo, 189 (JP)
(74) Representative: Henkel, Feiler, Hänzel & Partner

(56) References cited:
- WO-A-88/07185
- US-A- 4 813 271
- US-A- 4 841 775

## Description

### Background of the Invention

### 1. Field of the Invention

The present invention relates to a vibrating type pressure measuring device, in which the vibrator beam formed on a silicon substrate is let to vibrate in the natural frequency of the vibrator beam thereof, and detects the change of the vibration frequency generated in the vibrator beam in correspondence to the change of the force applied to the substrate, and together with that, the resonance of the measuring diaphragm due to the vibration of the vibrator beam is prevented, and together with that, the destruction of the measuring diaphragm due to the shock wave-like measuring pressure is also prevented.

The present invention relates to a vibrating type transducer in which the vibrator beam does not adhere to the wall surface of a vacuum chamber, even if there is such a case that the vibrator beam contacts to the wall surface of the vacuum chamber by the external disturbance such as shock, etc., and buckling, etc., and returns perfectly to the initial state, when the external disturbance is removed.

### 2. Description of the Prior Art

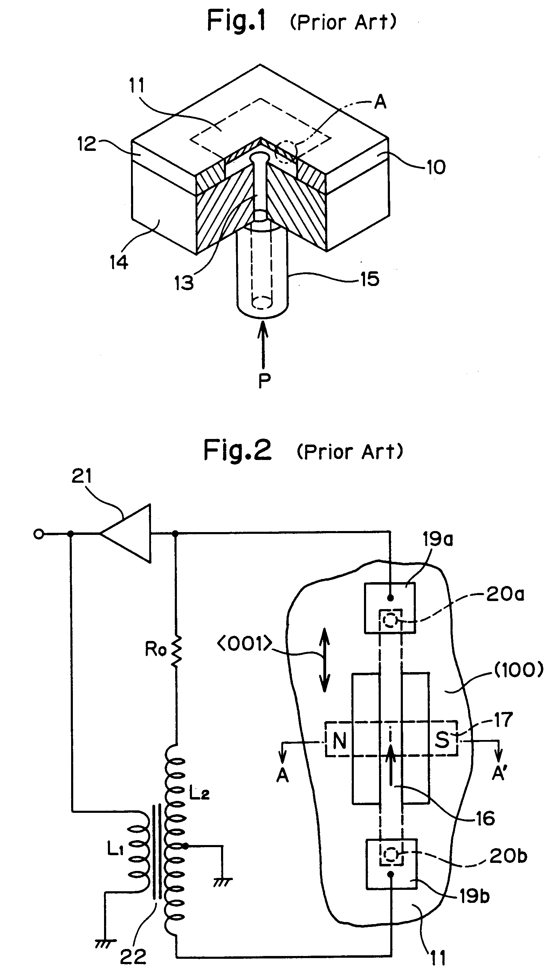

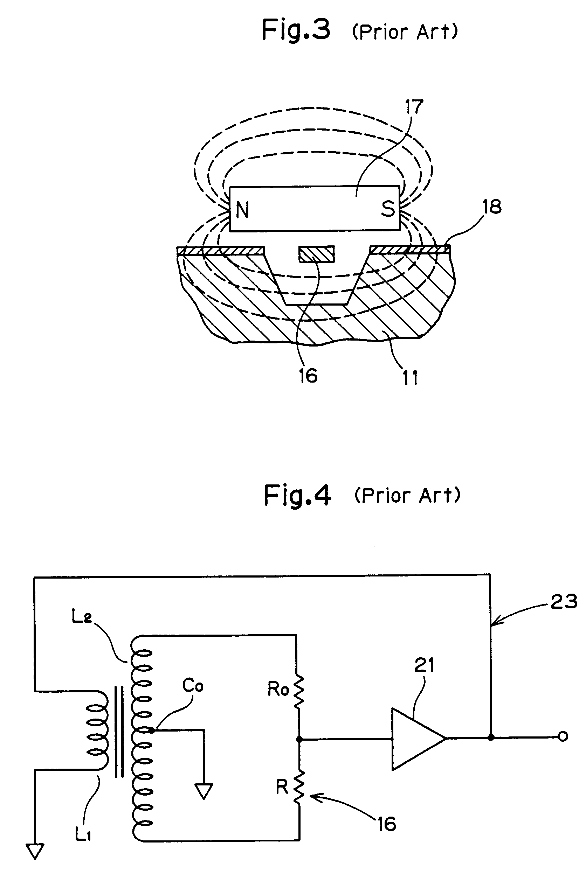

Figs. 1 to 4 are constitutional diagrams for showing the constitution of an embodiment of the conventional vibrating type pressure measuring device, for example, shown in USP No. 4841775 as a perspective diagram. Fig. 2 is a constitutional diagram in which the A part in Fig. 1 is enlarged, and a vibration detecting circuit has been connected thereto, Fig. 3 a sectional diagram for showing A-A′ sectional surface in Fig. 2, Fig. 4 an explanatory diagram in which the constitution shown in Fig. 2 has been shown by an electrical equivalent circuit.

As shown in Fig. 1, numeral 10 denotes a substrate of the silicon single crystal of the conduction type of D type, in which the upper surface thereof has the crystalline plane of (100), for example, of the impurity concentration of less than 10¹⁵ atoms/cm³. On one surface of this substrate 10, there is formed a diaphragm 11 by being engraved by etching from the back surface, in thin thickness.

The thick thickness part 12 in the circumferential part of this diaphragm 11 is adhered to a pedestal 14 having a pressure conducting hole 13 in the center, and further, this pedestal 14 is adhered to a pressure conducting pipe 15 in such a manner as it communicates to the pressure conducting hole 13, and the pressure P to be measured is introduced in this pressure conducting pipe 15.

On the surface of the side not subjected to the above-described etching of this diaphragm 11 shown with a symbol A, there is formed partially an n⁺ diffusion layer (abridged in the figure) of the impurity concentration of about 10¹⁷, and on one part of this n⁺ diffusion layer, is formed the vibrator 16 in the direction of the crystal axis 〈001〉 (Fig. 2). In this vibrator 16, the n⁺ layer and the D layer are processed by use of the technologies of the photolithography and the underetching.

Numeral 17 denotes a magnet provided in non-contact state and perpendicularly to the vibrator 16 at about the central upper part of the vibrator 16, and numeral 18 denotes an SiO₂ film as an insulating film (cf. Fig. 3).

Numerals 19a and 19b denote metal electrodes such as aluminium, etc., and a terminal of this metal electrode 19a is connected to the n⁺ layer elongated from the vibrator 16 through a contact hole 20a provided via the SiO₂ layer, and another terminal thereof is connected to a terminal of a comparative resistance R_{c}, which has approximately equal resistance value to that of the vibrator 16, and the input terminal of an amplifier 21, respectively. From the output terminal of the amplifier 21, together with that output signals are taken out, it is connected to a terminal of the primary coil L₁ of a transformer 22. Another terminal of this coil L₁ is connected to a common line.

On the other hand, another terminal of the comparative resistance R_{c} is connected to a terminal of the secondary coil L₂ of the transformer 22 in which the midpoint is connected to the common line, and another terminal of this secondary coil L₂ is connected to the metal electrode 19b formed on another terminal of the vibrator 16 via contact hole 20b to the n⁺ layer.

In the above-described constitution, when reverse bias voltage is applied between the D type layer (substrate 10) and the n⁺ type layer (vibrator 16) to insulate them, and DC current i is passed to the vibrator 16, although the impedance rises up in the resonance state of the vibrator beam 16, the equivalent circuit as shown in Fig. 4 is obtained when the impedance at this time is denoted as R.

Therefore, since a bridge is constituted with the secondary coil L₂ in which the midpoint C₀ has been connected to the common line, the comparative resistance R₀, and the impedance R₀, the non-equilibrium signals by this bridge are detected by the amplifier 21, and when the output thereof is positive, the output is returned to the primary coil L₁, and the system generates self-exciting vibration with the natural frequency of the vibrator 16.

In the above-described constitution, the impedance R of the vibrator beam 16 rises up in the natural frequency. This impedance R can be represented by the following equation.${\text{R ≒ (1/222)·(1/(Egγ)}}^{\text{1/2}} {\text{)·(AB²l²/bh²)·Q + R}}_{\text{d}} \text{,}$
wherein,
- E :: elasticity,
- g :: gravitational acceleration,
- γ :: density of the material constituting the vibrator,
- A :: a constant determined by the vibrating mode,
- B :: magnetic flux density,
- l :: length of the vibrator beam,
- b :: width of the vibrator beam,
- h :: thickness of the vibrator beam,
- Q :: sharpness of the resonance,
- R_{d} :: DC resistance value.

According to the above-described equation, since Q of the vibrator 16 takes the value of several hundred to several ten thousand, large vibration signals can be obtained as the output of the amplifier 21 in the resonance state. As described above, when the vibrating type transducer is constituted in such a manner that it carries out positive return by taking the gain of the amplifier 21 sufficiently large, the system carries out self-exciting vibration at the natural frequency.

By the way, as the vibrator may be used the one formed in the p type, for example, by diffusing B (boron) to the n type silicon substrate for more than 4x10¹⁹ atoms /cm³ and by means of selective etching.

However, in such a device as described above, when the resonance frequency number of the diaphragm is in the performance frequency number range of the vibrator 16, and overlaps to the resonance frequency of the vibrator 16 by the change of the pressure, lock-in is generated to deteriorate the linearity, or generates hysteresis.

Also, for the shock-like measuring pressure, a squeeze RE is provided in the pressure conducting hole 13, and by providing a suitable time constant by the volume CV of the pressure measuring chamber around the silicon diaphragm 11, the destruction of the silicon diaphragm 11 by the shock-like measuring pressure is prevented.

In general, since the silicon diaphragm 11 has resonance characteristics, it is designed in such a manner as described in the following.

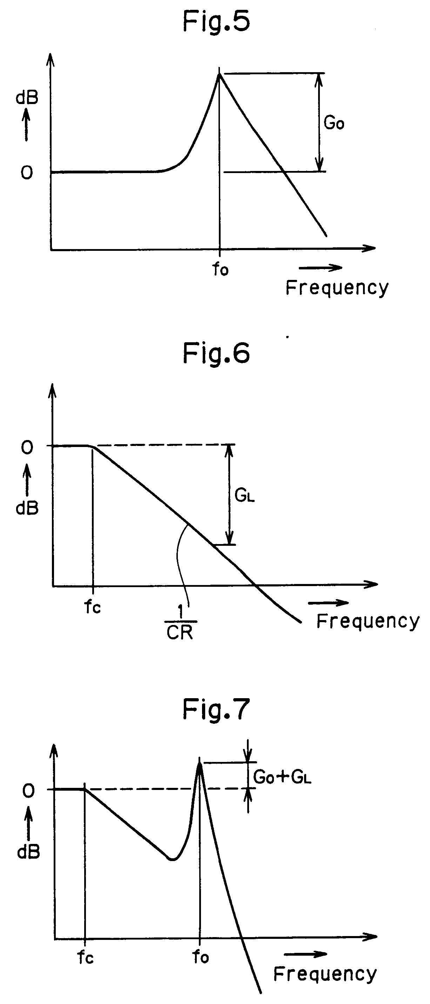

At first, as shown in Fig. 5, the frequency characteristics of the silicon diaphragm 11 will be examined.

In Fig. 5, the ordinate represents dB and the abscissa the frequency. The symbol f₀ denotes the resonance frequency of the silicon diaphragm 11, and G₀ the amplitude ratio at the resonance point.

Next, as shown in Fig. 6, the frequency characteristics of the pressure conducting line will be investigated.

In Fig. 6, the ordinate represents dB and the abscissa the frequency. The symbol f_{c} represents the shut-down frequency of the pressure conducting line G_{L} the amplitude ratio, CV the volume, and RE the squeeze.

Total characteristics are shown in Fig. 7.

Thus, the pressure conducting line frequency characteristics must be designed in such a manner that it becomes such as G₀ + G_{L} ≦ 0 dB. In this case,
(1) The shut-down frequency f_{c} of the pressure conducting line becomes low, and the answering becomes bad.
(2) Large squeeze RE becomes necessary.
(3) The volume CV must be made large, and temperature characteristics become bad.

Due to such facts, miniaturization becomes difficult. By the way, a pressure measuring apparatus using vibratable wire is suitable for detecting the vibration frequency of the vibrator, and for detecting the frequency output as a digital output. Since it is a digital output, it has high resolution and high S/N ratio, but since the vibrator is made of metal, it has the defect of generating the drift and hysteresis.

Further document WO-A-88/07185 describes an isolator apparatus suitable to prevent destruction on a diaphragm by a shock-like pressure. This apparatus uses external isolation ("seal") diaphragms in combination with a coupling ("charging") fluid to transmit pressure via communicating conduits "(holes") to a sensitive sensing diaphragm located in a central cavity within the apparatus' main body.

### Summary of the Invention

It is an object of the present invention to provide a vibrating type pressure measuring device, which has good linearity, hysteresis, and a cheap price, and which has good shock wave proof measuring pressure characteristics, and good temperature characteristics, and is easy to be miniaturised.

To solve this object the present invention provides a vibrating type pressure measuring device as specified in claim 1.

### Brief Description of the Drawings

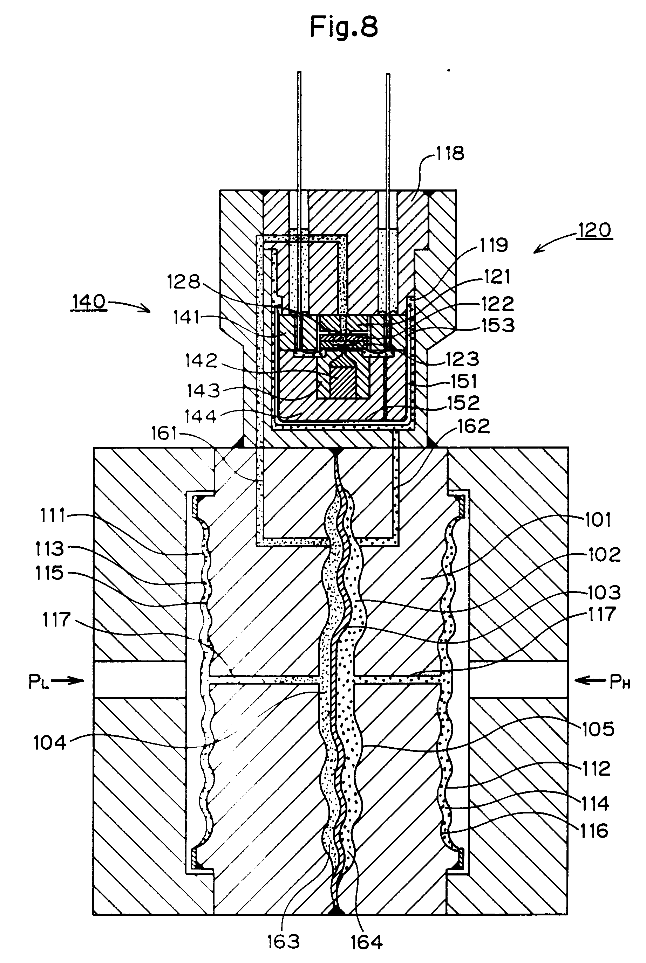

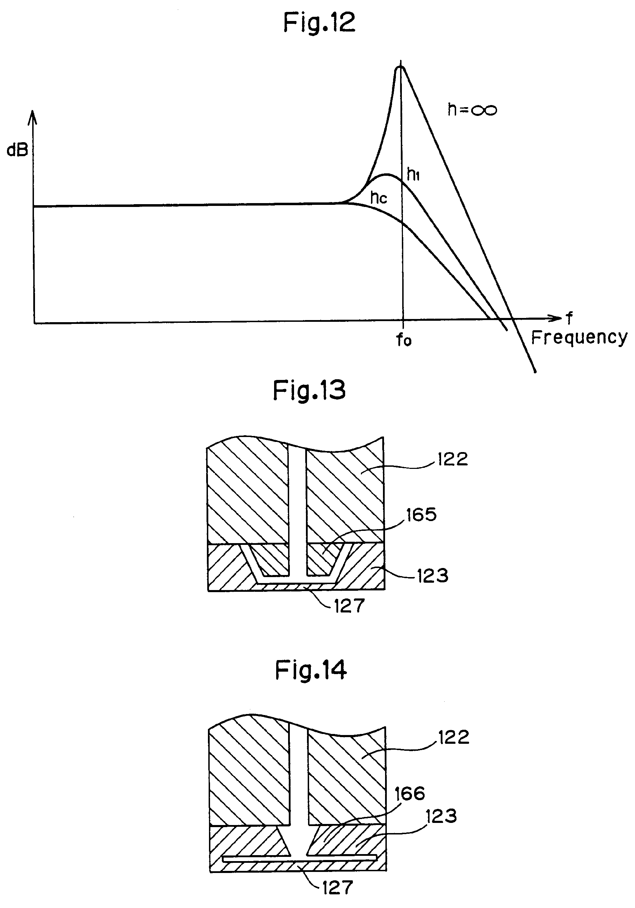

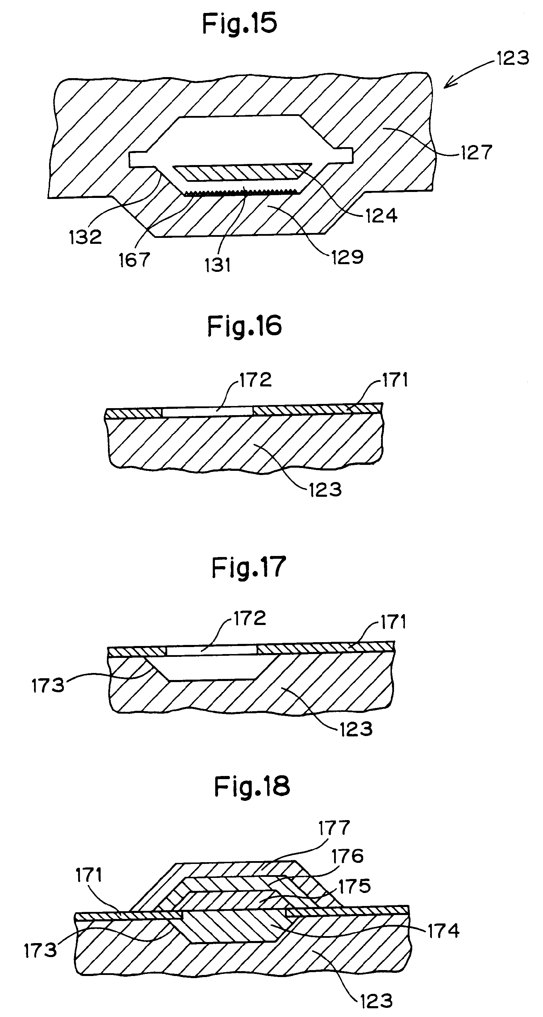

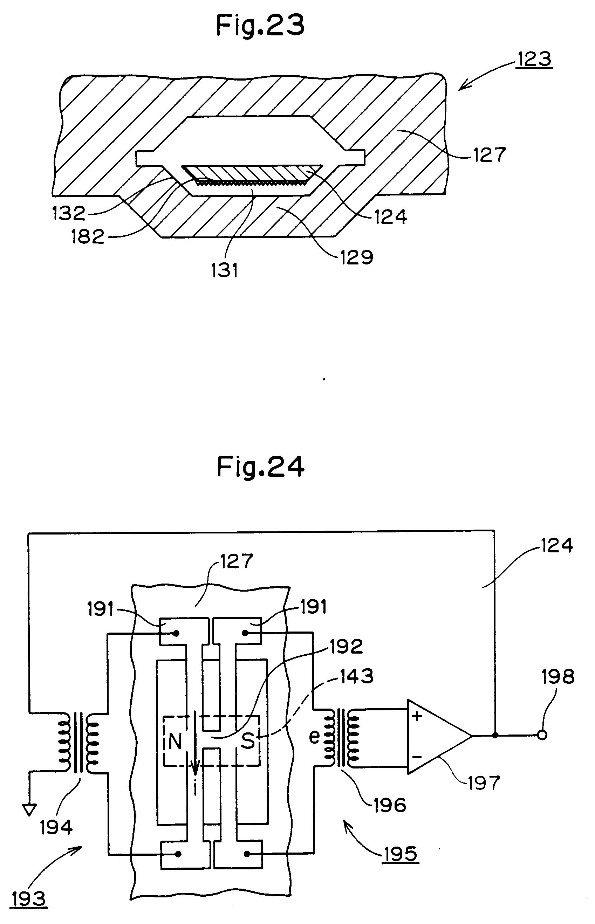

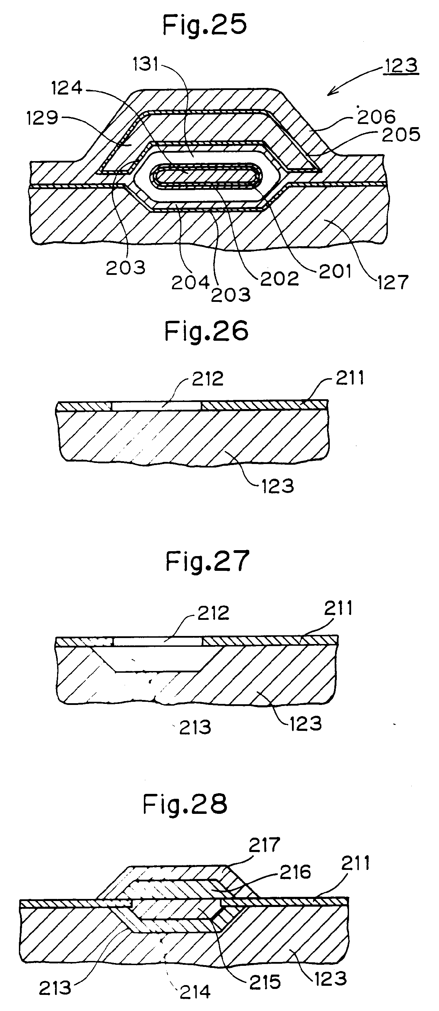

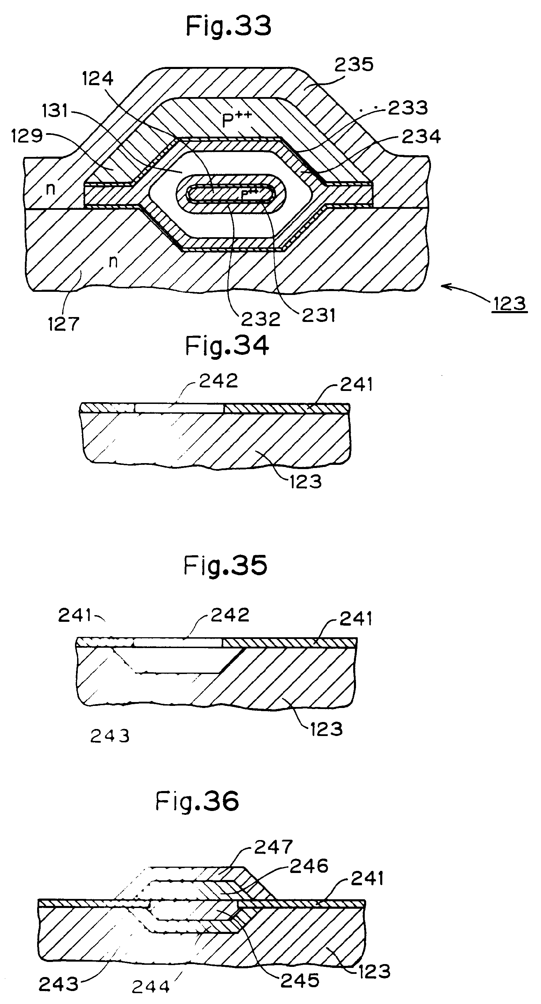

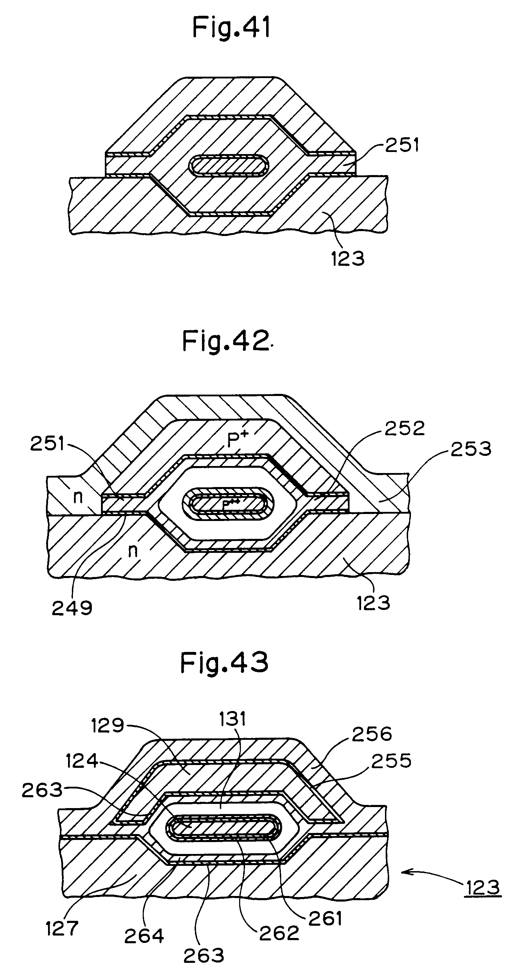

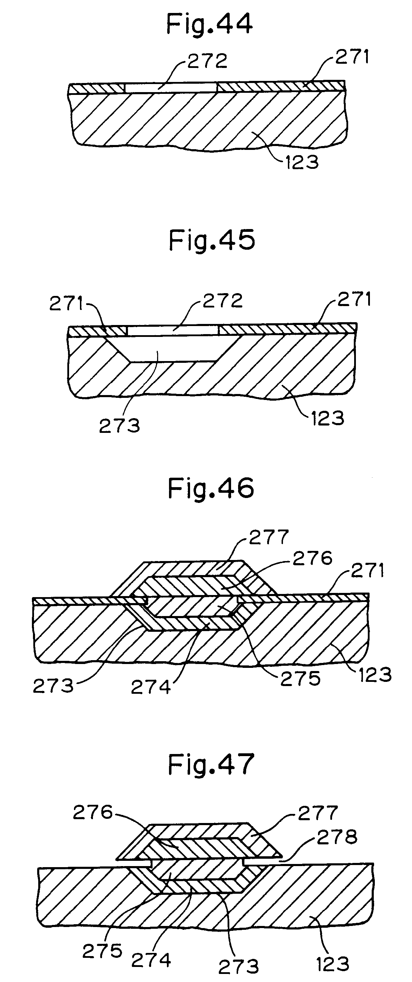

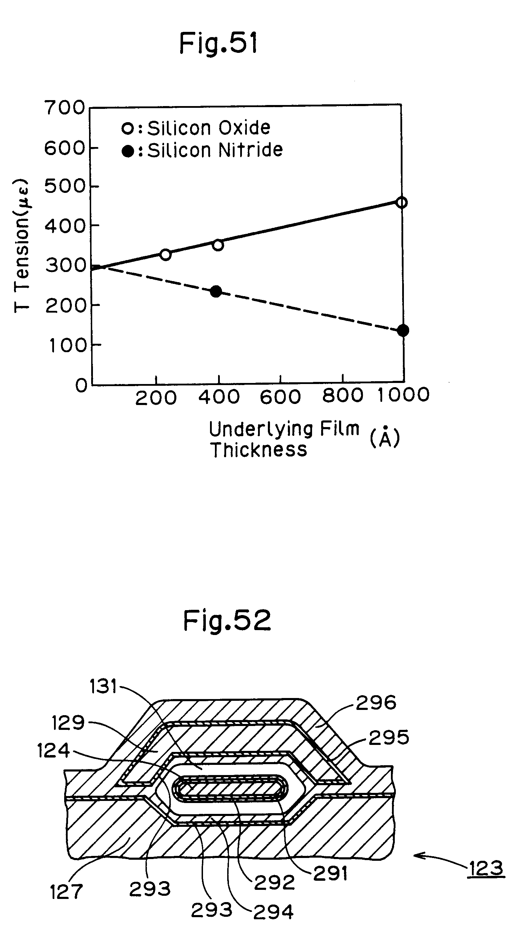

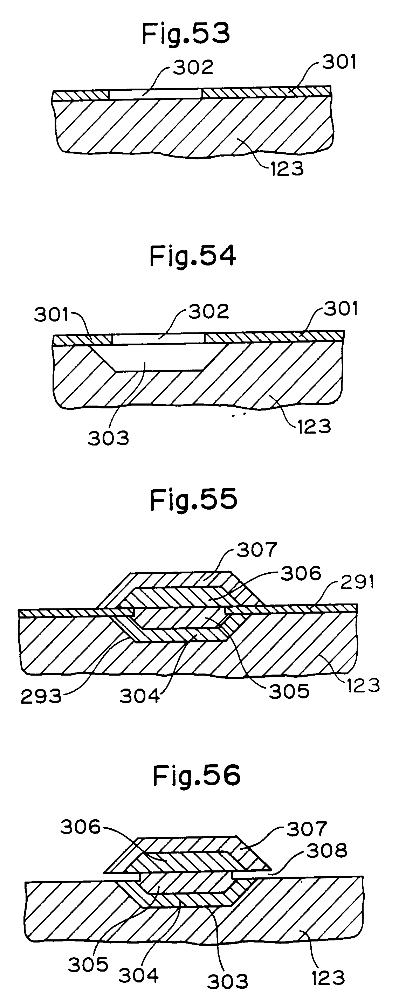

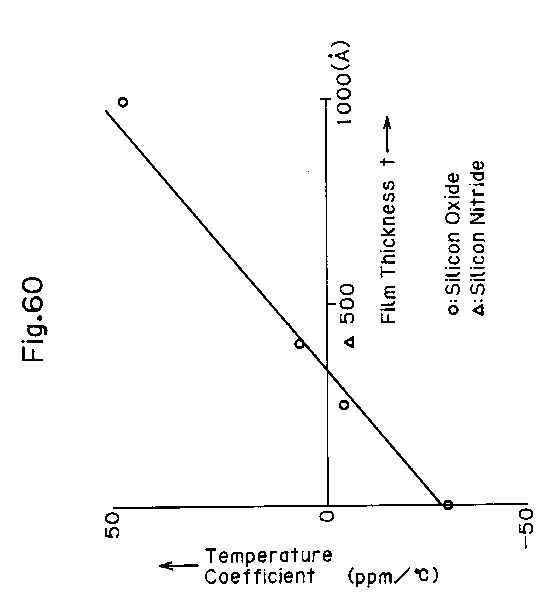

Figs. 1 to 4 are constitution explanatory diagrams of the conventional examples used heretofore in general; Figs. 5 to 7 are explanatory diagrams of the performance of Fig. 1; Figs. 11 and 12 are performance explanatory diagrams of Fig. 8; Fig. 13 is an essential part constitution explanatory diagram of another embodiment of the present invention; Fig. 14 is an essential part constitution explanatory diagram of the different embodiment of the present invention; Fig. 15 is an essential part constitution explanatory diagram of another embodiment of the present invention; Figs. 16 to 22 are production procedure explanatory diagrams of Fig. 15; Fig. 23 is an essential part constitution explanatory diagram of another embodiment of the present invention; Fig. 24 is an essential part constitution explanatory diagram of the use example of the vibrator beam of the present invention; Fig. 25 is an essential part constitution explanatory diagram of a different embodiment of the present invention; Figs. 26 to 32 are production procedure explanatory diagrams of Fig. 25; Fig. 33 is an essential part constitution explanatory diagram of another embodiment of the present invention; Figs. 34 to 42 are production procedure explanatory diagrams of Fig. 33; Fig. 43 is an essential part constitution explanatory diagram of the different embodiment of the present invention; Figs. 44 to 50 are the production procedure explanatory diagrams of Fig. 43; Fig. 51 is a performance explanatory diagram of Fig. 43; Fig. 52 is an essential part constitution explanatory diagram of another embodiment of the present invention; Figs. 53 to 59 are the production procedure explanatory diagrams of Fig. 52; and Fig. 60 is the performance explanatory diagram of Fig. 52.

### Description of the Preferred Embodiments

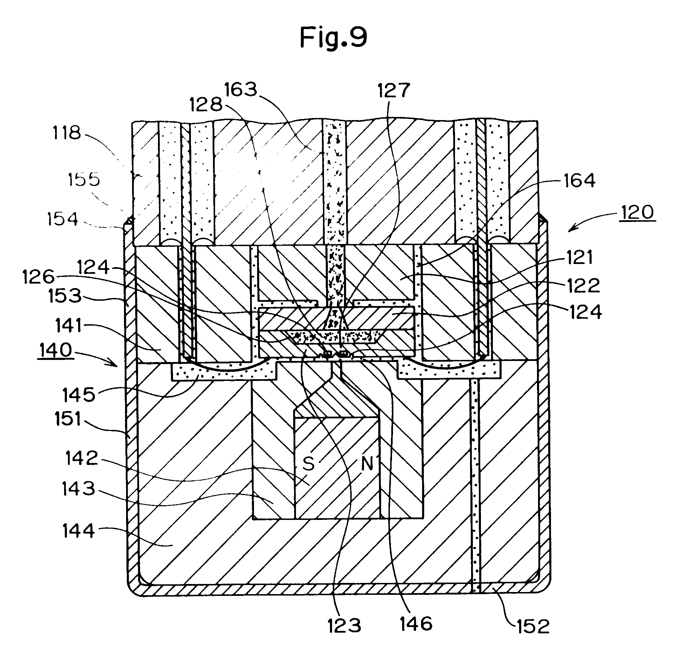

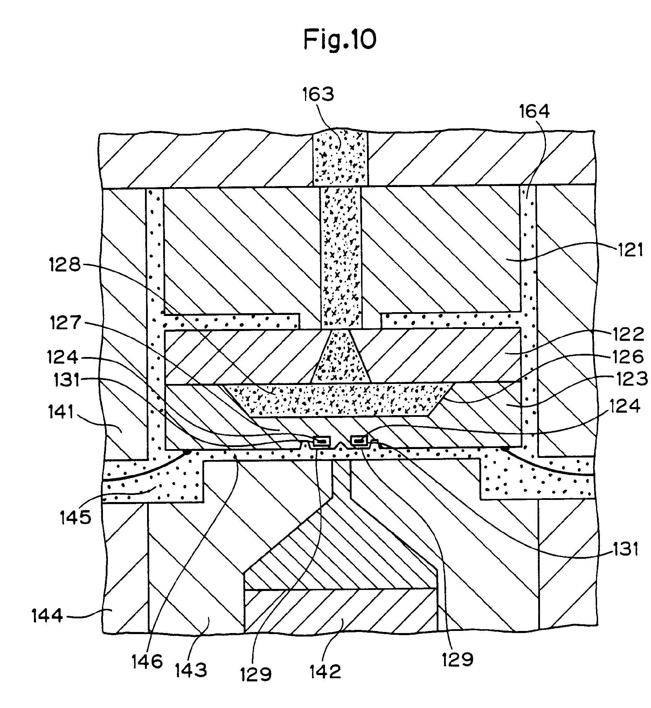

Fig. 8 is an essential part constitution explanatory diagram of an embodiment of the present invention, Fig. 9 is an essential part detailed diagram of Fig. 8, and Fig. 10 is an essential part detailed diagram of Fig. 9.

In the figures, numeral 101 denotes a block-like body, 102 an internal chamber provided in the inside of the body 101, and 103 a center diaphragm for dividing the inside chamber 102 into two center chambers 104 and 105.

The ones denoted by the numerals 111 and 112 are provided in the external side surface of the body 101, and are seal diaphragms for constituting the body 101 and the seal chambers 113 and 114. Numerals 115 and 116 denote back up nests provided in the body 101 in opposition to the seal diaphragms 111 and 112.

Numeral 117 is a communicating hole for communicating the center chambers 104 and 105 and the seal chambers 113 and 114.

Numeral 118 is a housing having one surface connected to the body 101 and an inside vacant space 119.

Numeral 120 is a sensor part comprising a supporting body 121, a substrate 122, a chip part 123, and a vibrator beam 124.

The supporting body 121 is provided in the internal vacant space 119.

The substrate 122 has one surface supported by the supporting body 121, and consists of silicon.

The chip part 123 has a diaphragm 127 formed with a concave part 126, and a measuring chamber of one side 128 constituted of the substrate 122 and the concave part 126, and consists of silicon.

The vibrator beam 124 is provided in the diaphragm 127 by keeping a vacant space 131.

The part between the vacant space 131 and the external surface of the chip part 123 constitutes a shell 129.

Numeral 140 denotes a DC applying means, and comprises a spacer 141, a permanent magnet 142, a yoke 143, and a yoke holder 144, and constitutes the sensor part 120 and the measuring chamber 145 of another side, and applies DC magnetic field to the above-described vibrator beam.

The spacer 141 has one surface fixed in the housing 118, and is provided in the circumference of the supporting body 121, substrate 122, and chip part 123.

The permanent magnet 142 is arranged in opposition to the vibrator beam 124.

The yoke 143 preserves the permanent magnet 142 and applies perpendicularly intersecting magnetic flux to the axial direction of the vibrator beam 124, and together with that, has one surface approached to the diaphragm 127, and constitutes a required narrow vacant space 145 with the diaphragm 127.

The yoke holder 144 holds the yoke 143, and is fixed to the spacer 141.

Numeral 151 denotes a cap body of U letter shaped cross section having elasticity for setting the relative position of the vibrator beam 124 and the magnet 142 with good precision, and consists of a material having thermal expansion coefficient nearly equal to that of the yoke holder 144 and the housing 118, and it has such a construction that the yoke holder 144 is fitted in a gap in the bottom part 152, which presses the yoke holder 144 to the spacer 141, and in the open hole part 153 side, the housing 118 is fitted in the gap and is welded 155 and fixed to the housing 118 at the open port peripheral part 154.

Numeral 161 denotes a communicating hole for communicating the measuring chamber 128 of one side to the one side 105 of the center chamber.

Numeral 162 denotes a communicating hole for communicating the measuring chamber 145 of another side to the another side 106 of the center chamber.

Numerals 163 and 160 are non-compressive charged liquids respectively charged in two chambers constituted of the seal chambers 113 and 114, communicating holes 117, 161 and 162, center chambers 105 and 106, internal vacant space 119, and measuring chambers 128 and 145. In this case, silicon oil is used as the charged liquids.

In the above-described constitution, the differential pressure applied to the seal diaphragms 111 and 112 is transmitted to the measuring chambers 128 and 145, respectively, via communicating holes 161 and 162, and let the diaphragm 127 be displaced in correspondence to the differential pressure. By the displacement proportional to this differential pressure, the axial power of the vibrator beam 124 fixed at both ends to the diaphragm 127 is changed.

The vibrator beam 124 is constituted in such a manner that it vibrates at the natural frequency of the vibrator beam 124 by the magnetic field of the DC applying means 140 and the closed loop self exciting vibration circuit (described in the following) connected to the vibrator beam 124.

Therefore, since the natural frequency of the vibrator beam 124 changes, when the axial power of the vibrator beam 124 changes, the measuring pressure can be measured.

Then, the diaphragm 127 does not resonance to the vibrator beam 124, by being damped by the yoke 143 arranged to hold a predetermined gap in opposition to the measuring diaphragm 127, the interval dimension of a predetermined gap 146, and the viscocity resistance of the charged liquid 164 intervened in the gap 146.

Also, since the frequency answering characteristics of the measuring diaphragm 127 is constituted in such a manner that it becomes less than the critical attenuation for the external shock wave measuring pressure, the pressure is perfectly damped, and a flat frequency answer can be obtained till the resonance frequency of the measuring diaphragm 127.

That is, although the diaphragm 127 has the resonance frequency determined by the shape thereof, but it is braked by the silicon oil 154 intervened in the gap between the diaphragm 127 and the yoke 143, and the diaphragm 127 can be made not to resonance, even if the vibration frequency number of the vibrator beam 124 agrees to the resonance frequency of the diaphragm 127.

For example, in the present embodiment, this condition is sufficiently attained in a silicon oil of 100 cs by the gap 146 of <0.1 mm between the yoke 143 and the diaphragm 127.

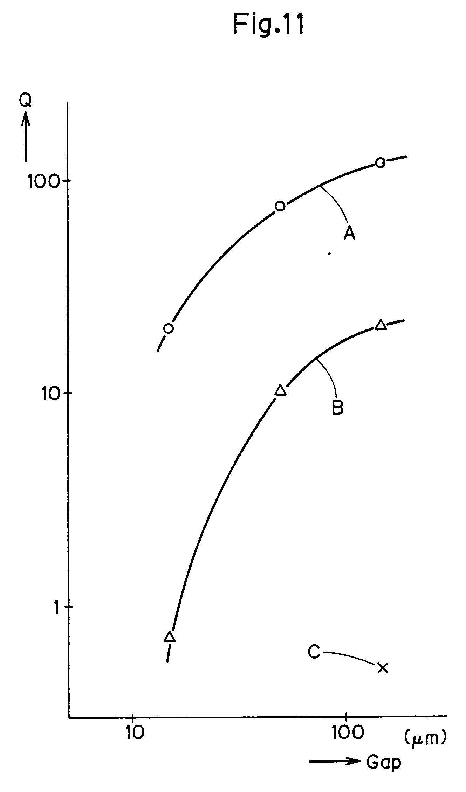

Fig. 11 shows an example in which the relationship of Q of the diaphragm 127 and the gap 146 in various kinds of fluids has been actually measured. It has been known that at Q < 0.7, the influence of the resonance of the diaphragm 127 becomes little.

The symbol A shows the case where the charged liquid 164 is the atmosphere, B the case of Freon®, and C the case of silicon.

Also, since by the yoke 143 arranged by keeping a predetermined gap 146 in opposition to the diaphragm 127, the interval dimension h of the predetermined gap 146, and the viscocity resistance of the charged liquid 164 intervened in the gap, the device is constituted in such a manner that the frequency answering characteristics of the diaphragm 127 for the external shock wave measuring pressure become less than the critical attenuation, so that it is perfectly damped, and flat frequency answer can be obtained till the resonance frequency of the diaphragm 127.

As the result,
(1) Since the resonance of the diaphragm 127 is not generated for the vibrator beam 124, there is no case of deteriorating the linearity by the resonance, and of generating the hysteresis, and a vibrating type pressure measuring device of high precision can be obtained.
(2) Even if a shock-like measuring pressure is applied to the device, the diaphragm 127 is not destructed. That is, the diaphragm 127 is not destructed by the shock-like measuring pressure, and a pressure measuring device for showing high frequency wave answer can be obtained.
(3) The squeeze R and the volume can be made small, and a device having good temperature characteristics becomes easily miniaturised.

In Fig. 12 is shown the relationship between the gap dimension h and the frequency wave characteristics of the device.

The frequency wave characteristic shown by the gap h_{c} shows the frequency wave characteristic curve of the present invention.

Also, in the cap body 151, the housing 118 and the yoke holder are fitted in the gap, and the bottom part 152 is made push the yoke holder 144 and the spacer 141 in the direction of the vibrator beam 124, and since the open port peripheral part 154 of the cap body 151 has been fixed to the housing 118 by welding 155, so that since the cap body 151 can push the yoke holder 144 to the housing 118, the relative position of the housing and the yoke-holder can be correctly assured. Therefore, the relative position of the vibrator beam 124 and the magnet 142 in the perpendicular direction to the axis of the cap body 124 can be assembled with good precision and correctly.

Due to such a fact, improvement of the output characteristics can be devised, and the precision of the measuring pressure can be improved.

Also, in the pushing to fix performance by the cap body 151 and the bottom part 152, since there is no position of joining or adhesion, there is not generated harmful stress concentration, strain, etc. for the external disturbance such as that of the temperature. That is, strong and stable characteristics of the device can be assured for long period.

Fig. 13 is an essential part constitution explanatory diagram of another embodiment of the present invention. In the present embodiment, a rigid body wall 165 has been provided in opposition to the internal side surface of the diaphragm 127.

Fig. 14 is an essential part constitution explanatory diagram of another embodiment of the present invention. In the present embodiment, the diaphragm 127 and the rigid body wall 166 has been provided in one united constitution.

Fig. 15 is an essential part constitution explanatory diagram of another embodiment of the present invention. By the way, in the conventional example of Fig. 1, the surface of the vibrator 3 is a mirror surface, and since the surface roughness is little and the surface is active, when the vibrator 3 contacts to the wall surface of the diaphragm 11 by external disturbance such as the shock, etc. or the buckling, etc. due to a large compression force, there happens to generate such a case that the vibrator as it is, adheres to the wall surface of the diaphragm.

As a countermeasure therefor, it can be conjectured that the side wall surface of the diaphragm 11 is made be an inclined surface, and the side surface of the legthwise direction of the vibratoror 3 just touches to this inclined surface to form a line contact.

However, even if the diaphragm has been constituted in such a manner as described above, it is not solved that the vibrator beam adheres to the wall surface of the diaphragm 11. The embodiment in Fig. 15 intends to solve this problematic point.

In the figure, numeral 167 denotes a rough surface or an uneven surface provided on the wall surface 132 of the diaphragm 127 or on the surface of the vibrator beam 124 in such a manner as that the vibrator beam 124 does not adhere to the wall surface 132 of the diaphragm 127. In this case, the surface provided on the wall surface 132 of the diaphragm 127 consists of a polysilicon layer having a large surface.

In the present embodiment, even if there is such a case that the vibrator beam 124 contacts to the wall surface of the diaphragm 127 due to the external disturbance such as shock, etc. or buckling, etc., the vibrator beam 124 does not adhere on the wall surface 132 of the diaphragm 127 due to the existence of the rough surface 167, and when the external disturbance has been removed, the device can perfectly return to the initial state.

That is, in the case when the wall surface 132 of the diaphragm 127 is a mirror surface, since the surface roughness is little and the surface is active, although there is such a fear that the vibrator beam 124, as it is, adheres to the wall surface 132 of the diaphragm 127, when the vibrator beam 124 contacts to the wall surface 132 of the diaphragm 127, but since the wall surface 132 of the diaphragm has been made be covered with a polysilicon layer 167, there is no such case that the vibrator beam 124 adheres to the wall surface 132 of the diaphragm 127, and the reliability of the device can be improved.

Further, in this case, although explanation has been given on the case where the polysilicon layer 167 has been provided on the surface of a part of the wall surface 132 of the diaphragm 127, it is needless to say that the polysilicon layer 167 may be provided on the total surface of the wall surface 132 of the diaphragm 127.

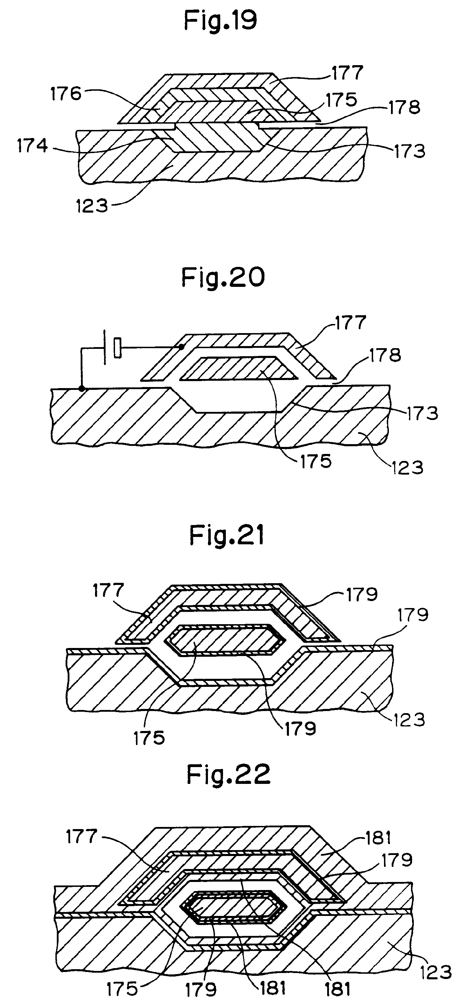

Such a chip part 123 as described above is prepared, for example, as shown in Figs. 16 to 22.
(1) As shown in Fig. 16, on the chip part 123 cut on the n type silicon (100) surface, the film 171 of silicon oxide or silicon nitride is formed. The required position 172 of the film 171 is removed by photolithography.
(2) As shown in Fig. 17, in a hydrogen (H₂) atmosphere of 1050°C, a concave part 173 is formed by carrying out etching with hydrogen chloride, and by etching a required part 172 of the chip part 123, and undercutting the film 171.
   By the way, the anisotropic etching may be used in which high temperature steam and oxygen are used, or an alkaline liquid of 40°C to 130°C is used, in-stead of hydrogen chloride.
(3) As shown in Fig. 18, selective epitaxial growth method is carried out in an atmosphere of hydrogen (H₂) of 1050°C by mixing hydrogen chloride gas in the source gas. That is,
   ① The first epitaxial layer 174 corresponding to the half of the gap 131 is let be subjected to the selective epitaxial growth with the p type silicon of the boron concentration of 10¹⁸ cm⁻³.
   ② The second epitaxial layer 175 corresponding to the oscillation beam 124 is let be subjected to the selective epitaxial growth with the p type silicon of the boron concentration of 3×10¹⁹ cm⁻³.
   ③ On the surface of the second epitaxial layer 175, the third epitaxial layer 176 corresponding to the lower half of the gap 131 is let be subjected to the selective epitaxial growth with the p type silicon of the boron concentration of 10¹⁸ cm⁻³.
   ④ On the surface of the third epitaxial layer 176, the fourth epitaxial layer 177 corresponding to the shell 129 is let be subjected to the selective epitaxial growth with the p type silicon of the boron concentration of 10¹⁹ cm⁻³.
(4) As shown in Fig. 19, an etching pouring inlet 178 is provided by removing the film 171 of silicon oxide or silicon nitride by carrying out etching with hydrogen fluoride acid (HF).
(5) As shown in Fig. 20, for the fourth layer, by applying positive pulse or positive voltage to the chip part 123 and pouring in an alkaline liquid from the etching pouring inlet 178, the first epitaxial layer 174 and the third epitaxial layer 176 are removed by carrying out selective etching.
   The reason why there is the difference of the etching action between the second epitaxial layer 175 and the first epitaxial layer 174 or the third epitaxial layer 176 resides in that a suppressing phenomenon is generated in the etching action, when the boron concentration becomes more than 3×10¹⁹ cm⁻³.
(6) As shown in Fig. 21, on the total surface, the film 179 of silicon oxide or silicon nitride is formed. In this case, the silicon oxide film 179 is formed.
(7) As shown in Fig. 22, a polysilicon layer 181 is formed at 950°C and in 200 Torr in the state of silan (SiH₄) of 0.3ℓ/min, phosphine (PH₃) of 0.0005 l/min, and hydrogen of 200 l/min, and the etching pouring inlet 178 is closed. The surface roughness of the polysilicon layer 181 in this case is about 0.1 µm in the pitch interval.

Fig. 23 is an essential part constitution explanatory diagram of another embodiment of the present invention, and is an enlarged diagram centered at the part of the vibrator beam 124. In the figure, the constitution having the same symbol as that in Fig. 8 represents the same function.

Numeral 182 denotes a rough surface provided on the one surface in the side of the shell 129 of the vibrator beam 124.

In the above-described constitution, when a measuring pressure is applied on the vibrator beam 124, the axial force of the vibrator beam 124 changes, and since its natural frequency changes, the pressure to be measured can be measured by the change of the vibrator frequency.

Then, since a rough surface 182 is provided on one surface in the side of the shell 129 of the vibrator beam 124, even in the case when the vibrator beam 124 contacts to the wall surface 132 of the diaphragm 127, the vibrator beam 124 does not adhere to the wall surface 132 of the diaphragm 127 due to the existence of the rough surface 182, and can perfectly return to the initial state, when the external disturbance is removed.

Fig. 24 is an essential part constitution explanatory diagram of the use example of the vibrator beam of the present invention. In the figure, numeral 124 denotes an vibrator beam in which both terminals are fixed on the diaphragm 127, and are equipped with two first vibrators 191 and the second vibrator 192 for mechanically connecting the node parts of the vibration of the first vibrators 191.

Numeral 193 denotes the vibration exciting means for exciting the vibrator beam 124 by the magnetic induction action to the direction for perpendicularly intersecting the magnetic field and current by letting AC current flow to the both terminals of the first vibrator 191 of one side by an input transformer 194 by applying perpendicularly intersecting magnetic field to the vibrator beam 124 with a magnet 143.

In the input transformer 194, the secondary side is connected to the both terminals of the first vibrator 191 of one side.

Numeral 195 denotes the vibration detecting means for detecting the electromotive force generated in both terminals of another first vibrator 191. In this case, an output transformer 196 and an amplifier 197 are used. The primary side of the output transformer 196 is connected to both terminals of another first vibrator 191, and the secondary side is connected to the output terminal 198 via the amplifier 197, and together with that, is diverged and connected to the primary side of the input transformer 194, and constitutes as a whole a positive feed back self exciting vibration circuit. The vibration of the vibrator beam 124 is detected by the vibration detecting means 195, and is taken out as output signals.

By the way, in the above-described embodiment, although explanation has been given on the rough surface of such ones which are provided on the wall surface of the shell 129 on the wall surface 132 of the diaphragm, or on one surface of the shell 127 of the vibrator beam 124, but it is not limitted to these ones, and for example, the rough surface may be provided on the whole of the wall surface of the diaphragm 132 or on the whole surface of the vibrator beam 124, and in short, it may be such one in which the vibrator beam 124 does not adhere to the diaphragm wall surface 132. Also, it is needless to say that it is not a rough surface but is an uneven surface.

Fig. 25 is an essential part constitution explanatory diagram of another embodiment of the present invention, and is an enlarged diagram centered to the part of the vibrator beam 124. In the figure, the constitution of the same symbol as that in Fig. 8 represents the same function.

Numeral 201 denotes the first layer consisting of the oxide film or nitride film provided by covering the surface of the vibrator beam 124.

Numeral 202 denotes the second layer consisting of polysilicon having rough surface and provided by covering the surface of the first layer 201.

Numeral 203 denotes the third layer consisting of oxide film or nitride film provided by covering the wall surface 132 of the wall surface 132.

Numeral 204 denotes the fourth layer consisting of polysilicon provided by covering the surface of the third layer 203.

Numeral 205 dnotes the fifth layer consisting of oxide film or nitride film provided by covering the external surface of the shell 129.

Numeral 206 denotes the sixth layer consisting of polysilicon provided by covering the surface of the fifth layer 205.

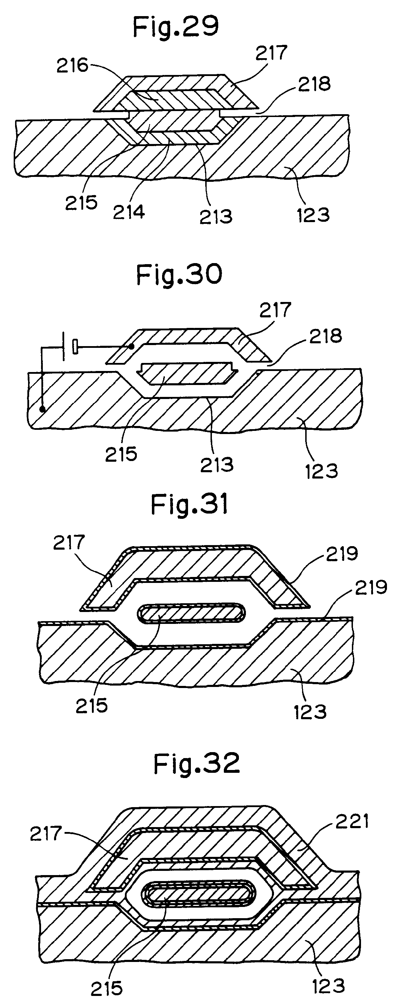

In the above-described constitution, the vibrating type transducer of the embodiment of Fig. 25 is produced as shown in Figs. 26 to 32.
(1) As shown in Fig. 26, on the chip part 123 cut on the (100) plane of the n type silicon, the film 211 of silicon oxide or silicon nitride is formed. The required position 212 of the film 211 is removed by photolithography.
(2) As shown in Fig. 27, in the hydrogen (H₂) atmosphere of 1050°C, etching has been carried out by hydrogen chloride, and by undercutting the film 211 by etching the required position 212 of the chip part 123, a concave part 213 is formed.
   By the way, instead of hydrogen chloride, may be used high temperature steam and oxygen, or the anisotropic etching with an alkalie liquid of 40°C to 130°C may be used.
(3) As shown in Fig. 28, in a hydrogen (H₂) atmosphere of 1050°C, the selective epitaxial growth method is carried out by mixing hydrogen chloride gas in the source gas.
   That is,
   ① With the P type silicon of the boron concentration of 10¹⁸ cm⁻³, the first epitaxial layer 214 corresponding to the upper half of the gap 131 is made be subjected to the selective epitaxial growth.
   ② With the P type silicon of the boron concentration of 3×10¹⁹ cm⁻³, the second epitaxial layer 215 corresponding to the vibrator beam 124 is made be subjected to the selective epitaxial growth in such a manner that the required part 212 is closed on the surface of the first epitaxial layer 214.
   ③ With the P type silicon of the boron concentration of 10¹⁸ cm⁻³, the third epitaxial layer 216 corresponding to the lower half of the gap 131 is made be subjected to the selective epitaxial growth on the surface of the second epitaxial layer 215.
   ④ With the P type silicon of the boron concentration of 3×10¹⁹ cm⁻³, the fourth epitaxial layer 217 corresponding to the shell 4 is made be subjected to the selective epitaxial growth on the surface of the third epitaxial layer 216.
(4) As shown in Fig. 29, the film 211 of silicon oxide or silicon nitride is removed by carrying out etching with hydrogen fluoride acid (HF), and an etching pouring inlet 218 is provided.
(5) As shown in Fig. 30, by applying positive pulse or positive voltage to the chip part 123 for the fourth layer, the first epitaxial layer 214 and the third epitaxial layer 216 are removed by carrying out the selective etching by pouring in an alkaline liquid from the etching pouring inlet 218.
   The reason why the difference of the etching action is present between the second epitaxial layer 215 and the first epitaxial layer 214 or the third epitaxial layer 216 resides in the generation of the suppressing phenomenon to the etching action, when the boron concentration becomes more than 3×10¹⁹ cm⁻³.
(6) As shown in Fig. 31, the film 219 of silicon oxide or silicon nitride is formed on the whole body. In this case, an silicon oxide film 219 is formed.
(7) As shown in Fig. 32, at 950°C and in 200 Torr, in the state of silane (SiH₄) of 0. 3 l/min, phosphine (PH₃) of 0.0005 l/min, and hydrogen of 200 l/min, a polysilicon layer 221 is formed on the silicon oxide film 219, and the etching pouring inlet 218 is closed. The surface roughness of the polysilicon layer 221 is about 0.1 µm in the pitch interval.

As a result, since the surface of the vibrator beam 124 is a mirror surface, and its surface roughness is little and it is active, although there is such a fear that when the vibrator beam 124 contacts to the wall surface of the shell 129 by the external disturbance such as shock, etc. or buckling, etc. due to a large compression force, it adheres, as it is, on the wall surface of the shell 129, but since the surface of the vibrator beam 124 has been made be covered with the second layer consisting of polysilicon having rough surface, the vibrator beam 124 does not adhere to the wall surface of the shell 129, and reliability of the device is improved.

Fig. 33 is an essential part constitution explanatory diagram of another embodiment of the present invention and an enlarged diagram centered at the part of the vibrator beam 124. In the figure, the constitution of the same symbol as that in Fig. 8, represents the same function.

Numeral 231 denotes the first layer consisting of an oxide film or a nitride film provided by covering the surface of the vibrator beam 124.

Numeral 232 denotes the second layer consisting of polysilicon of a rough surface provided by covering the surface of the first layer 231.

Numeral 233 denotes the third layer consisting of an oxide film or a nitride film provided by covering the wall surface 132 of the diaphragm 127.

Numeral 234 denotes the fourth layer consisting of polysilicon provided by covering the surface of the third layer 223.

Numeral 235 denotes the seventh layer consisting of a silicon single crystal provided by covering the external surface of the shell 129.

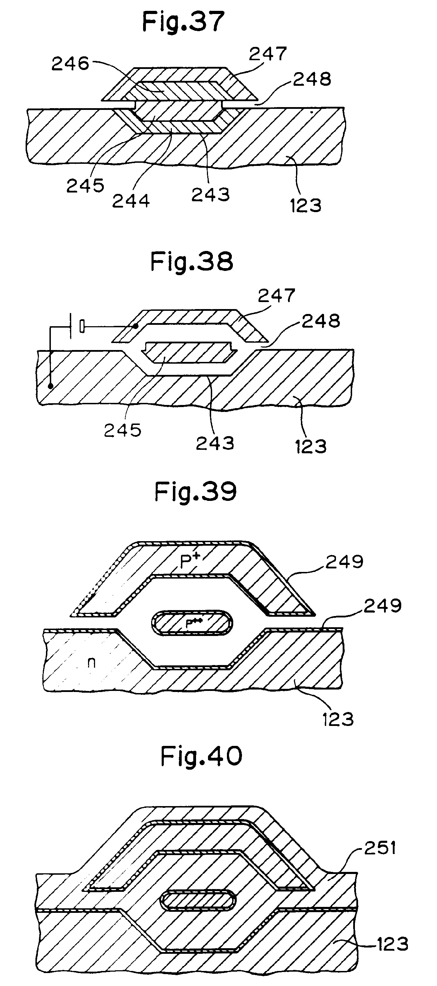

In the above-described constitution, the vibrating type transducer of the embodiment of Fig. 33 is produced in such a manner as described in Figs. 34 to 42.
(1) As shown in Fig. 34, the film 241 of silicon oxide or silicon nitride is formed on the chip part 123 cut on the (100) plane of the n type silicon. The necessary part 242 of the film 241 is removed by photolithography.
(2) As shown in Fig. 35, in an atmosphere of hydrogen (H₂) of 1050°C, etching is carried out with hydrogen chloride, and the necessary position 242 of the chip part 123 is etched and the film 241 is undercut to form a concave part 243.
   By the way, instead of hydrogen chloride, high temperature steam and oxygen may be used, or the anisotropic etching by an alkaline liquid of 40°C to 130°C may be used.
(3) As shown in Fig. 36, in an atmosphere of hydrogen (H₂) of 1050°C, the selective epitaxial growth method is carried out by mixing hydrogen chloride gas in the source gas.
   That is,
   ① By the p type silicon of the boron concentration of 10¹⁸ cm⁻³, the first epitaxial layer 244 corresponding to the upper half of the gap 131 is let be subjected to the selective epitaxial growth.
   ② By the p type silicon of the boron concentration of 3×10¹⁹ cm⁻³, the second epitaxial layer 245 corresponding to the vibrator beam 124 is let be subjected to the selective epitaxial growth on the surface of the first epitaxial layer 244, in such a manner as to close the necessary position 242.
   ③ By the p type silicon of the boron concentration of 10¹⁸ cm⁻³, on the surface of the second epitaxial layer 245, the third epitaxial layer 246 corresponding to the lower half of the gap 131 is let be subjected to the selective epitaxial growth.
   ④ By the p type silicon of the boron concentration of 3×10¹⁹ cm⁻³, the fourth epitaxial layer 247 is let be subjected to the selective epitaxial growth on the surface of the third epitaxial layer 246.
(4) As shown in Fig. 37, the film 241 of silicon oxide or silicon nitride is removed by etching with hydrogen fluoride (HF) to provide an etching pouring inlet 248.
(5) As shown in Fig. 38, by applying positive pulse or positive voltage to the chip part 123 for the fourth layer, and by pouring in an alkaline liquid from the etching pouring inlet 248, the first epitaxial layer 244 and the third epitaxial layer 246 are removed by carrying out selective etching.
   The reason why there is the difference of etching actions between the second epitaxial layer 245 and the first epitaxial layer 244 or the third epitaxial layer 246 resides in that a suppressing phenomenon is generated in the etching action, when the boron concentration becomes more than 3×10¹⁹ cm⁻³.
(6) As shown in Fig. 39, the film 249 of silicon oxide or silicon nitride is formed on the whole body. In this case silicon oxide film 249 is formed.
(7) As shown in Fig. 40, positive type resist 251 is painted on the whole body. After painting the resist 251, whole surface exposure is carried out with ultraviolet rays.
(8) As shown in Fig. 41, the resist 251 is developed, and the exposured part is removed. Thereafter, the silicon oxide films 249 on the external surface of the fourth epitaxial layer 247 and the external surface of the chip part 123 are removed by etching.
(9) As shown in Fig. 42, the resist 251 is removed. Thereafter, at 950°C and in 200 Torr, in the state of silane (SiH₄) of 0.3 l/min, phosphine (PH₃) of 0.0005 l/min, and hydrogen of 200 l/min, the polysilicon layer 252 is formed on the surface of the silicon oxide film 249, and the etching pouring inlet 248 is closed.

Then, on the external surface of the fourth epitaxial layer 247 and the external surface of the chip part 123, is formed the n type fifth epitaxial growth layer 253. The surface roughness of the polysilicon layer 252 in this case is about 0.1 µm in the pitch interval.

As a result, since the surface of the vibrator beam 124 is a mirror surface, and the surface roughness is little and the surface is active, when the vibrator beam 124 contacts to the wall surface of the shell 129 due to the external disturbance such as shock, etc. and buckling, etc. by a large compression force, there is the fear that the vibrator beam, as it is, adheres on the wall surface of the shell 129, but since the surface of the vibrator beam 124 has been made be covered by the second layer consisting of polysilicon having rough surface, there occurs no such case that the vibrator beam 124 adheres on the surface of the shell 129, and the reliability of the device is improved.

Then, by making the surface of the diaphragm 127 in the outside of the shell 129, which has no relationship to the maladhesion countermeasure of the vibrator beam 124, be a single crystal, the strength, elastic characteristics, and stability similar to those of the conventional measuring diaphragm comprising whole single crystals can be obtained.

Fig. 43 is a constitution explanatory diagram of another embodiment of the present invention, and an enlarged diagram centered to the part of the vibrator beam 124.

In general, the tension of the vibrator beam 124 in the case of being used as a strain gauge, gives influence as a gauge factor GF.${\text{GF = (1/2) (0.24 (L/h)²)/(1 + 0.24 (L/h)² ε}}_{\text{o}} \text{)}$
- L :: length of vibrator beam 124
- h :: thickness of vibrator beam
- εₒ :: tension strain

The performance point of the strain gauge is limitted by the working conditions such as, for example, the condition that the boron concentration is more than 3×10¹⁹ cm⁻³, and therefore, the crystal strain in the vibrator beam 124 is limitted to about 200 to 300µ.

The device has such a defect that the design range capable of being selected becomes narrow due to the restriction of this performance point.

The embodiment shown in Fig. 43 intends to solve this problem.

In the embodiment of Fig. 43, the constitution of the same symbol as that in Fig. 8 represents the same function.

Numeral 261 denotes the first layer consisting of the oxide film or nitride film provided by covering the surface of the vibrator beam 3.

Numeral 262 denotes the second layer consisting of polysilicon provided by covering the first layer 261.

Numeral 263 denotes the third layer consisting of an oxide film or a nitride film provided by covering the wall surface of the diaphragm 132.

Numeral 264 denotes the fourth layer consisting of polysilicon provided by covering the surface of the third layer 263.

Numeral 265 denotes the fifth layer consisting of an oxide film or a nitride film provided by covering the external surface of the shell 129.

Numeral 266 denotes the sixth film consisting of polysilicon provided by covering the surface of the fifth layer 265.

Then, by adjusting the film thickness of the first layer 261 and the second layer 262, the tension formed by the vibrator beam 124, the first layer 261, and the second layer 262 is adjusted to a predetermined tension.

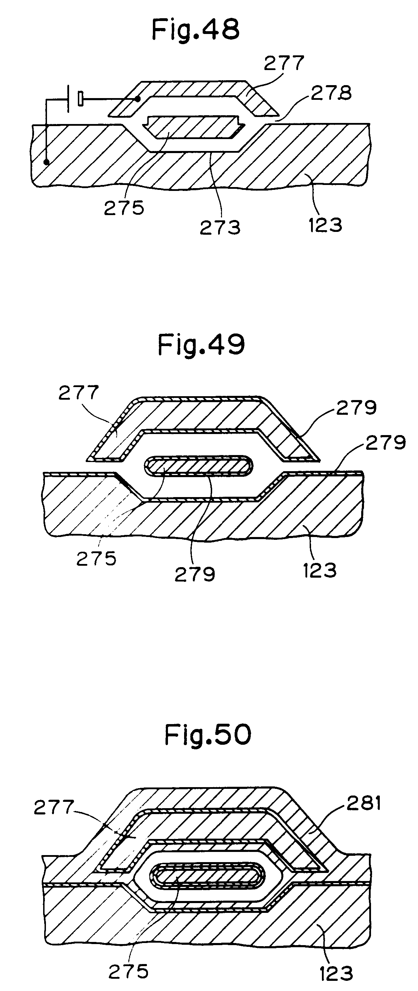

In the above-described constitution, the vibrating type transducer of the embodiment of Fig. 43 is produced in such a manner as shown in Figs. 44 to 50.
(1) As shown in Fig. 44, the chip part 123 cut on the (100) plane of the n type silicon, the film 271 of a silicon oxide or silicon nitride is formed. The necessary position 272 of the film 271 is removed by photolithography.
(2) As shown in Fig. 45, in a hydrogen (H₂) atmosphere of 1050°C, etching is carried out with hydrogen chloride, and the necessary position 272 of the chip part 123 is etched to undercut the film 271, and to form a concave part 273.
   By the way, instead of hydrogen chloride, may be used high temperature steam and oxygen, or the anisotropic etching with an alkaline liquid of 40°C to 130°C may be used.
(3) As shown in Fig. 46, in a hydrogen (H₂) atmosphere of 1050°C, the selective epitaxial growth method is carried out by mixing hydrogen chloride gas in the source gas. That is,
   ① With the p type silicon of the boron concentration of 10¹⁸ cm⁻³, the first epitaxial layer 274 corresponding to the upper half of the gap 131 is made be subjected to the selective epitaxial growth.
   ② With the p type silicon of the boron concentration of 3×10¹⁹ cm⁻³, on the surface of the first epitaxial layer 274, the second epitaxial layer 275 corresponding to the vibrator beam 124 is made be subjected to the selective epitaxial growth in such a manner as to close the necessary position 272.
   ③ With the p type silicon of the boron concentration of 10¹⁸ cm⁻³, on the surface of the second epitaxial layer 275, the third epitaxial layer 276 corresponding to the lower half of the gap 131 is made be subjected to the selective epitaxial growth.
   ④ With the p type silicon of the boron concentration of 3×10¹⁹ cm⁻³, on the surface of the third epitaxial layer 276, the fourth epitaxial layer 277 corresponding to the shell 129 is made be subjected to the selective epitaxial growth.
(4) As shown in Fig. 47, the film 271 of silicon oxide or silicon nitride is removed by etching with hydrogen fluoride (HF) to provide an etching pouring inlet 278.
(5) As shown in Fig. 48, by applying positive pulse or positive voltage to the chip part 123 for the fourth layer 277, and by pouring in an alkaline liquid from the etching pouring inlet 278, the first epitaxial layer 274 and the third epitaxial layer 276 are removed by carrying out selective etching.
   The reason why there is difference of the etching action between the second epitaxial layer 275 and the first epitaxial layer 274 or the third epitaxial layer 276 resides in that a suppressing phenomenon is generated in the etching action, when the boron concentration becomes more than 3×10¹⁹ cm⁻³.
(6) As shown in Fig. 49, the film 279 of silicon oxide or silicon nitride is formed on the whole body. In this case, the silicon oxide film is formed.
(7) As shown in Fig. 50, at 950°C and in 200 Torr, and in the state of silane (SiH₄) of 0.3 l/min, phosphine (PH₃) of 0.0005 l/min, and hydrogen of 200 l/min, a polysilicon layer 281 is formed on the surface of the silicon oxide film 279, and the etching pouring inlet 278 is closed. The surface roughness of the polysilicon layer 281 in this case is about 0.1 µm in the pitch interval.

Then, by adjusting the film thickness of the first layer 261 and the second layer 262, the tension formed by the vibrator beam 124, the first layer 261, and the second layer 262 is adjusted to the predetermined tension.

As a result, in the case when the vibrator beam 124 has been formed with the silicon of high boron concentration, the tension T becomes about 100 to 300 µ in dependence to the boron concentratiom. When the first layer 281 consisting of the oxide film is formed on this vibrator beam 124, a compression force is generated, and since the tension T of the first layer 261 changes with the film thickness of the first layer 261, the tension T of the whole part of the vibrator beam can be regulated.

Further, when the silicon nitride film is formed as the first layer 261, a tensioning force is generated, and since the tension of the first layer 261 changes, the tension T of the whole part of the vibrator beam can be regulated further.

Furthermore, since the second layer 262 consisting of polysilicon and having the tension nearly equal to 0 has been provided on the external surface of the first layer 261, the tension T of the whole part of the vibrator beam can be made approach to 0, and the tension T as that of the whole part of the vibrator beam can be more easily regulated.

In Fig. 51, the relationship between the silicon oxide film thickness A, the silicon nitride film thickness B, and the temperature coefficient α is shown.

The thickness of the silicon oxide film A is shown with a white circle, and the thickness of the silicon nitride film B with a black circle. Here, when the silicon nitride film is made be as 2000 Å, the total thickness becomes about 700 µ.

By the way, when the surface of the vibrator beam 124 is covered with the second layer 262 consisting of polysilicon having rough surface, there occurs no case where the vibrator beam 124 adheres on the wall surface of the shell 129, and the reliability of the device is improved.

Fig. 52 is an essential part constitution explanatory diagram of another embodiment of the present invention.

In general, the temperature coefficient of the natural frequency of the silicon vibrator beam 124 is -30 to 40 ppm/K, and this is the value from the physical property values.

When it is such as described above, the temperature coefficient is too large for the case of using it in the sensor of high precision, and the stability of the temperature sensor for use of the temperature correction is required. As a result, the device becomes expensive in the cost, and the stability of the whole device is influenced by the stability of the temperature sensor. The embodiment of Fig. 52 intends to solve this problem.

In the figure, the constitution of the same symbol as that of Fig. 8 represents the same function.

Numeral 291 denotes the first layer consisting of the oxide film or nitride film provided by covering the surface of the vibrator beam 124.

Numeral 292 denotes the second layer consisting of polysilicon provided by covering the surface of the first layer 291.

Numeral 293 denotes the third layer consisting of oxide layer or nitride layer provided by covering the wall surface 132 of the diaphragm 127.

Numeral 294 denotes the fourth layer consisting of polysilicon provided by covering the surface of the third layer 293.

Numeral 295 denotes the fifth layer consisting of oxide film or nitride film provided by covering the external surface of the shell 129.

Numeral 296 denotes the sixth layer consisting of polysilicon provided by covering the surface of the fifth layer 295.

Then, by adjusting the film thickness of the first layer 291 and the second layer 292, the temperature coefficient formed by the vibrator beam 124, the first layer 291, and the second layer 292 is adjusted to the predetermined temperature coefficient.

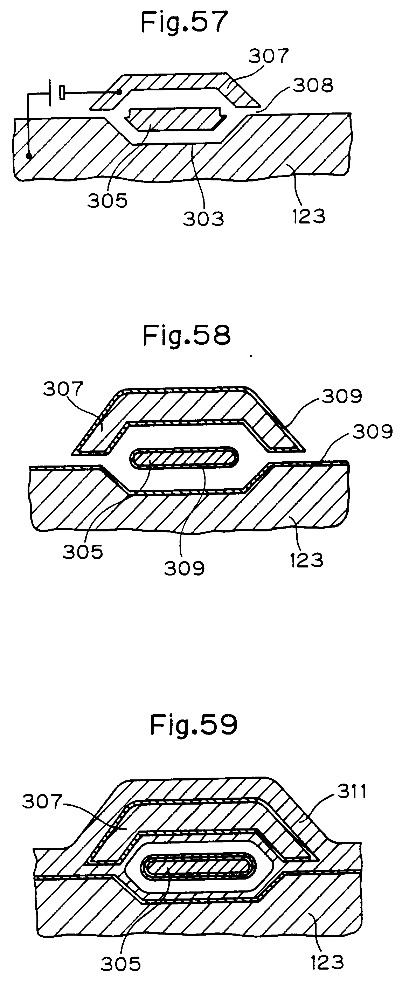

In the above-described constitution, the vibrating type transducer of the embodiment of Fig. 52 is produced in such a manner as described in Figs. 53 to 59.
(1) As shown in Fig. 53, on the chip part 123 cut on the (100) plane of n type silicon is formed the film 301 of silicon oxide or silicon nitride. The necessary position of film 301 is removed by photolithography.
(2) As shown in Fig. 54, in the hydrogen (H₂) atmosphere of 1050°C, etching is carried out with hydrogen chloride, and by etching the necessary part 302 in the chip part 123 to undercut the film 301, and a concave part 303 is formed. By the way, instead of hydrogen chloride, high temperature steam and oxygen may be used, or the anisotropic etching with an alkaline liquid of 40°C to 130°C may be used.
(3) As shown in Fig. 55, in the hydrogen (H₂) atmosphere of 1050°C, the selective epitaxial growth method is carried out. That is,
   ① With the p type silicon of the boron concentration of 10¹⁸ cm⁻³, the first epitaxial layer 304 corresponding to the upper half of the gap 131 is made be subjected to the selective epitaxial growth.
   ② With the p type silicon of the boron concentration of 3×10¹⁹ cm⁻³, on the surface of the first epitaxial layer 304, the second epitaxial layer 302 corresponding to the vibrator beam 124 is made be subjected to the selective epitaxial growth.
   ③ With the p type silicon of the boron concentration of 10¹⁸ cm⁻³, on the surface of the second epitaxial layer 305, the third epitaxial layer 306 corresponding to the lower half of the gap 131 is made be subjected to the selective epitaxial growth.
   ④ With the p type silicon of the boron concentration of 3×10¹⁹ cm⁻³, on the surface of the third epitaxial layer 306, the fourth epitaxial layer 307 is made be subjected to the selective epitaxial growth.
(4) As shown in Fig. 56, the film 301 of silicon oxide or silicon nitride is removed by etching with hydrogen fluoride acid (HF) to provide the etching pouring inlet 308.
(5) As shown in Fig. 57, by applying positive pulse or positive voltage to the chip part 123 for the fourth layer 301, and by pouring in an alkaline liquid from the etching pouring inlet 308, the first epitaxial layer 304 and the third epitaxial layer 306 are removed by carrying out selective etching.
   The reason why there is difference between the second epitaxial layer 305 and the first epitaxial layer 304 or the third epitaxial layer 306 resides in that a suppressing phenomenon is generated in the etching action when the boron concentration becomes more than 3×10¹⁹ cm⁻³
(6) As shown in Fig. 58, the film 309 of silicon oxide or silicon nitride is formed on the whole body. In this case, silicon oxide film is formed.
(7) As shown in Fig. 59, at 950°C in 200 Torr, in the state of silane (SiH₄) of 0.3 l/min, phosphine (PH₃) of 0.0005 l/min, and hydrogen of 200 l/min, polysilicon layer 311 is formed on the surface of the silicon oxide film 309, and the etching pouring inlet 308 is closed. The surface roughness of the polysilicon layer in this case is about 0.1 µm in pitch interval.

Then, by adjusting the film thickness of the first layer 291 and the second layer 292, the temperature coefficient formed by the vibrator beam 124, the first layer 291, and the second layer 292 is adjusted to the predetermined temperature coefficient.

As a result, in the case when the vibrator beam 124 has been produced with the high concentration boron silicon, the temperature coefficient α becomes to be determined by the boron concentration. When the first layer 291 consisting of an oxide film is formed, since the temperature coefficient of the first layer 291 changes by the film thickness of the first layer 291, the temperature coefficient of the whole vibrator beam part can be regulated to 0.

By the way, even if the silicon nitride film is formed as the first layer 291, since the temperature coefficient of the first layer 291 changes with the film thickness, the temperature coefficient of the whole vibrator beam part can be regulated to 0.

Further, since the second layer 292 consisting of polysilicon has been provided on the external surface of the first layer 291, it is more easily regulated that the temperature coefficient of the whole vibrator beam part is made 0.

In Fig. 60, is shown the relationship between the silicon oxide film thickness A, the silicon nitride film thickness B, and the temperature coefficient α in the case when the thickness of the vibrator beam 124 is 3.5 µm, and the thickness of the second layer is 1 µm.

The thickness A of the silicon oxide film is shown with a white circle, and the thickness B of the nitride film with a black circle.

By the way, in the above-described embodiment, although explanation has been given on the constitution of the fifth layer 295 consisting of oxide film or nitride film provided by covering the external surface of the shell 129 and the sixth layer 296 consisting of polysilicon provided by covering the surface of the fifth layer 295, but the constitution is not limitted to this one, and for example, it will do that the epitaxial growth layer consisting of a silicon single layer may be provided by removing the fifth layer 295 consisting of oxide film or nitride film on the external surface of the shell 129, and in effect, it will do that the one constituted in such a manner that it can seal the vibrator beam 124 may be used.

## Claims

1. A vibrating type pressure measuring device for measuring pressure by utilizing that the natural frequency of a vibrator beam (124) changes in correspondence to the change of axial force of the vibrator beam (124), comprising:
- a housing (118) having an internal space (119),
- a sensor part (120) provided in said internal space (119) and including:
-- a supporting body (121) fixed at one surface of said internal space (119),
-- a substrate (122) consisting of silicon supported by said supporting body (121), and
-- a chip part (123) consisting of silicon and having a recess (126) in an upper surface so as to define a sensing diaphragm (127), said chip part (123) being fixed to a surface of said substrate (122) so as to form a first measuring chamber between said substrate (122) and said sensing diaphragm (127), wherein said vibrator beam (124) consisting of silicon is provided within a vacuum cavity in said sensing diaphragm (127), said vibrating beam having an H shape of which the four tip parts are fixed to said sensing diaphragm (127),
- a DC magnetic field applying means (140) provided in said internal space (119) spaced from said sensing diaphragm so as to form a second measuring chamber (145) for applying a DC magnetic field to said vibrator beam (124), said DC magnetic field applying means (140) including:
-- a permanent magnet (142) arranged in opposition to said vibrator beam (124), and held within a yoke (143), said yoke (143) in turn held within a yoke holder (144),
-- a ring-like spacer (141) provided about said supporting body (121), said substrate (122) and said chip part (123), and spacing said magnet and said sensing diaphragm apart by a predetermined gap (146)
characterized in that said device further comprises
- a block-like body (101) having an internal chamber (102) with
- a center diaphragm (103) located therein
- seal diaphragms (111, 112) provided on external side surfaces of the block-like body (101), and defining therewith first and second seal chambers (113, 114), said center diaphragm (103) dividing said internal chamber (102) into two first and second center chambers (104, 105), each of which communicates with a respective one of said first and second seal chambers (113, 114) via first communicating holes (117)
- a second communicating hole (161) for communicating said first measuring chamber (128) to one (104) of said first and second center chambers (104, 105),
- a third communicating hole (162) for communicating said second measuring chamber (145) to the other (105) of said first and second center chamber (104, 105),
- a first charging liquid (163) for being charged in said first seal chamber (113), one of said first communicating holes (117), said second communicating hole (161), said first center chamber (104), said internal space (119) and said first measuring chamber (128), said liquid having a predetermined viscosity so as to cause a damping in combination with said predetermined gap (146) between said sensing diaphragm (127) and said yoke (143), and in use transmitting a pressure (P_{L}) applied to one (111) of said seal diaphragms (111, 112) to one surface of said sensing diaphragm (127),
- a second charging liquid (164) for being charged in said second seal chamber (114), the other of said first communicating holes (117), said third communicating hole (162), said second center chamber (105) and said second measuring chamber (145), having a predetermined viscosity to cause damping in combination with said predetermined gap (146) between said sensing diaphragm (127) and said yoke (143), and transmitting a measuring pressure (P_{H}) applied to the other (112) of said seal diaphragm (111, 112) to the other surface of said sensing diaphragm (127).

2. A vibrating type pressure measuring device as claimed in claim 1, characterized by being equipped with a rough surface or uneven surface (167) provided on the wall surface of said further diaphragm (127) or on the surface of said vibrator beam (124).

3. A vibrating type pressure measuring device as claimed in claim 1, characterized by being equipped with a first layer (201) consisting of an oxide film or nitride film provided by covering the surface of said vibrator beam (124),
a second layer (202) consisting of polysilicon having a rough surface provided by covering the surface of said first layer (201),
a third layer (203) consisting of oxide film or nitride film provided by covering the internal surface (132) of said gap (131), and
a fourth layer (204) consisting of polysilicon provided by covering the surface of said third layer (203),
a fifth layer (205) consisting of silicon oxide film or silicon nitride film provided by covering the external surface of a shell (129), and
a sixth layer (206) consisting of polysilicon provided by covering the surface of said fifth layer (205, Fig. 25).

4. A vibrating type pressure measuring device as claimed in claim 1, characterized by being equipped with
a first layer (231) consisting of an oxide film or nitride film provided by covering the surface of said vibrator beam (124),
a second layer (232) consisting of polysilicon having a rough surface provided by covering the surface of said first layer(231),
a third layer (233) consisting of an oxide film or nitride film provided by covering the internal surface (132) of said gap (131),
a fourth layer (234) consisting of polysilicon provided by covering the surface of said third layer (233), and
a seventh layer (235) consisting of silicon single crystal provided by covering the external surface of a shell (129, Fig. 33).

5. A vibrating type pressure measuring device as claimed in claim 1, characterized by being equipped with
a first layer (261) consisting of oxide film or nitride film provided by covering the surface of said vibrator beam (124),
a second layer (262) consisting of polysilicon provided by covering the surface of said first layer (261),
a third layer (263) consisting of oxide film or nitride film provided on the internal surface (132) of said gap (131), and
a fourth layer (264) consisting of polysilicon provided by covering the surface of said third layer (263), wherein:
by adjusting the film thickness of said first layer (261) and said second layer (262), the tension formed by the above-described vibrator beam (124), the first layer (261), and the second layer (262) is adjusted to a predetermined tension.

6. A vibrating type pressure measuring device as claimed in claim 1, characterized by being equipped with
a first layer (291) consisting of oxide film or nitride film provided by covering the surface of said vibrator beam (124),
a second layer (292) consisting of polysilicon provided by covering the surface of said first layer (291),
a third layer (293) consisting of oxide film or nitride film provided by covering the internal surface (132) of said gap (131), and
a fourth layer (294) consisting of polysilicon provided by covering said third layer (293), wherein:
by adjusting the film thickness of said first layer (291) and said second layer (292), the temperature coefficient formed by the above-described vibrator beam (124), the first layer (291), and the second layer (292) is adjusted to a predetermined temperature coefficient.

## Patentansprüche

1. Druckmeßvorrichtung des Vibrationstyps zur Druckmessung, die sich die Tatsache zunutze macht, daß sich die Eigenfrequenz eines Schwingelementes (124) entsprechend der Änderung der Axialkraft des Schwingelementes (124) ändert, welche folgendes umfaßt:
ein Gehäuse (118) mit einem Innenraum (119),
einen in dem Innenraum (119) vorgesehenen Sensorteil (120), welcher enthält:
einen Aufnahmekörper (121), welcher an einer Oberfläche des Innenraums (119) befestigt ist,
ein aus Silizium bestehendes Substrat (122), das vom Aufnahmekörper (121) getragen wird, und
einen aus Silizium bestehenden Chip-Teil (123) mit einer Vertiefung (126) in der Oberfläche zur Begrenzung einer Abtastmembran (127), wobei der Chip-Teil (123) an einer Oberfläche des Substrats (122) befestigt ist, um eine erste Meßkammer zwischen dem Substrat (122) und der Abtastmembran (127) zu bilden, in welcher das aus Silizium bestehende Schwingelement (124) in einem Vakuumhohlraum der Abtastmembran (127) angeordnet ist, wobei das Schwingelement eine H-Form hat, deren vier Spitzenteile an der Abtastmembran (127) befestigt sind,
eine Einrichtung (140) zum Anlegen eines Gleichstrom-Magnetfeldes, welche in dem Innenraum (119) im Abstand zur Abtastmembran angeordnet ist, daß sie eine zweite Meßkammer (145) zum Anlegen eines Gleichstrom-Magnetfeldes an das Schwingelement (124) bildet,
wobei die Einrichtung (140) zum Anlegen eines Gleichstrom-Magnetfeldes enthält:
einen dem Schwingelement (124) gegenüberliegend angeordneten Dauermagneten (142), welcher in einem Joch (143) gehalten wird, wobei das Joch (143) seinerseits in einem Jochhalter (144) gehalten wird,
ein ringartiges Abstandsstück (141), welches den Aufnahmekörper (121), das Substrat (122) und den Chip-Teil (123) umgibt und welches den Magneten und die Abtastmembran um einen vorgegebenen Spalt (146) zueinander auf Abstand hält,
dadurch gekennzeichnet, daß das Gerät des weiteren folgendes umfaßt:
einen blockartigen Körper (101) mit einer Innenkammer (102) und einer darin angeordneten zentralen Membran (103),
auf den äußeren Seitenflächen des blockartigen Körpers (101) vorgesehene Dichtmembranen (111, 112), welche mit diesem erste und zweite Dichtkammern (113, 114) begrenzen, wobei die zentrale Membran (103) die Innenkammer (102) in zwei erste und zweite zentrale Kammern (104, 105) unterteilt, von denen jede mit einer entsprechenden der ersten und zweiten Dichtkammer (113, 114) über erste Verbindungslöcher (117) in Verbindung steht,
ein zweites Verbindungsloch (161) zur Verbindung der ersten Meßkammer (128) mit einer (104) der ersten und zweiten zentralen Kammern (104, 105),
eine drittes Verbindungsloch (162) zur Verbindung der zweiten Meßkammer (145) mit der anderen (105) der ersten und zweiten zentralen Kammern (104, 105),
eine erste Füllflüssigkeit (163) zum Befüllen der ersten Dichtkammer (113), eines der ersten Verbindungslöcher (117), des zweiten Verbindungsloches (161), der ersten zentralen Kammer (104), des Innenraums (119) und der ersten Meßkammer (128), wobei die Flüssigkeit eine vorgegebene Viskosität besitzt, um zusammen mit dem vorgegebenen Spalt (146) zwischen der Abtastmembran (127) und dem Joch (143) eine Dämpfung zu bewirken und um im Betrieb einen auf eine (111) der Dichtmembranen (111, 112) aufgebrachten Druck (P_{L}) auf eine Oberfläche der Abtastmembran (127) zu übertragen,
eine zweite Füllflüssigkeit (164) zum Befüllen der zweiten Dichtkammer (114), des anderen der ersten Verbindungslöcher (117), des dritten Verbindungsloches (162), der zweiten zentralen Kammer (105) und der zweiten Meßkammer (145) mit einer vorgegebenen Viskosität, um zusammen mit dem vorgegebenen Spalt (146) zwischen der Abtastmembran (127) und dem Joch (143) eine Dämpfung zu bewirken und um im Betrieb einen auf die andere (112) der Dichtmembranen (111, 112) aufgebrachten Meßdruck (P_{H}) auf die andere Oberfläche der Abtastmembran (127) zu übertragen.

2. Druckmeßvorrichtung des Vibrationstyps gemäß Anspruch 1, dadurch gekennzeichnet, daß sie mit einer rauhen oder unebenen Oberfläche (167) auf der Wandoberfläche der Abtastmembran (127) oder auf der Oberfläche des Schwingelements (124) ausgeführt ist.

3. Druckmeßvorrichtung des Vibrationstyps gemäß Anspruch 1, dadurch gekennzeichnet, daß sie mit einer ersten Schicht (201), bestehend aus einem Oxidfilm oder Nitridfilm, welcher durch Beschichten der Oberfläche des Schwingelements (124) bereitgestellt wird,
einer zweiten Schicht (202), bestehend aus Polysilizium mit einer rauhen Oberfläche, welche durch Beschichten der Oberfläche der ersten Schicht (201) bereitgestellt wird,
einer dritten Schicht (203), bestehend aus einem Oxid- oder Nitridfilm, welcher durch Beschichten einer Innenfläche (132) eines Spalts (131) bereitgestellt wird, und
einer vierten Schicht (204), bestehend aus Polysilizium, welche durch Beschichten der Oberfläche der dritten Schicht (203) bereitgestellt wird,
einer fünften Schicht (205), bestehend aus einem Oxid- oder Nitridfilm, welcher durch Beschichten der Außenfläche eines Mantels (129) bereitgestellt wird, und
einer sechsten Schicht (206), bestehend aus Polysilizium, welche durch Beschichten der Oberfläche der fünften Schicht (205, Fig. 25), bereitgestellt wird, ausgeführt ist.

4. Druckmeßvorrichtung des Vibrationstyps gemäß Anspruch 1, dadurch gekennzeichnet, daß sie mit
einer ersten Schicht (231), bestehend aus einem Oxidfilm oder Nitridfilm, welcher durch Beschichten der Oberfläche des Schwingelements (124) bereitgestellt wird,
einer zweiten Schicht (232), bestehend aus Polysilizium mit einer rauhen Oberfläche, welche durch Beschichten der Oberfläche der ersten Schicht (231) bereitgestellt wird,
einer dritten Schicht (233), bestehend aus einem Oxid- oder Nitridfilm, welcher durch Beschichten der Innenfläche (132) des Spalts (131) bereitgestellt wird,
einer vierten Schicht (234), bestehend aus Polysilizium, welche durch Beschichten der Oberfläche der dritten Schicht (233) bereitgestellt wird, und
einer siebten Schicht (235), bestehend aus Siliziummonokristall, welcher durch Beschichten der Außenfläche des Mantels (129, Fig. 33) bereitgestellt wird, ausgeführt ist.

5. Druckmeßvorrichtung des Vibrationstyps gemäß Anspruch 1, dadurch gekennzeichnet, daß sie mit
einer ersten Schicht (261), bestehend aus einem Oxidfilm oder Nitridfilm, welcher durch Beschichten der Oberfläche des Schwingelements (124) bereitgestellt wird,
einer zweiten Schicht (262), bestehend aus Polysilizium mit einer rauhen Oberfläche, welche durch Beschichten der Oberfläche der ersten Schicht (261) bereitgestellt wird,
einer dritten Schicht (263), bestehend aus einem Oxid- oder Nitridfilm, welcher durch Beschichten der Innenfläche (132) des Spalts (131) bereitgestellt wird, und
einer vierten Schicht (264), bestehend aus Polysilizium, welche durch Beschichten der Oberfläche der dritten Schicht (263) bereitgestellt wird, ausgeführt ist, wobei
durch Verändern der Filmdicke der ersten Schicht (261) und der zweiten Schicht (262), die vom obenbeschriebenen Schwingelement (124), von der ersten Schicht (261) und der zweiten Schicht (262) ausgeübte Spannung auf eine vorgegebene Spannung eingestellt wird.

6. Druckmeßvorrichtung des Vibrationstyps gemäß Anspruch 1, dadurch gekennzeichnet, daß sie mit
einer ersten Schicht (291), bestehend aus einem Oxidfilm oder Nitridfilm, welcher durch Beschichten der Oberfläche des Schwingelements (124) bereitgestellt wird,
einer zweiten Schicht (292), bestehend aus Polysilizium mit einer rauhen Oberfläche, welche durch Beschichten der Oberfläche der ersten Schicht (291) bereitgestellt wird,
einer dritten Schicht (293), bestehend aus einem Oxid- oder Nitridfilm, welcher durch Beschichten der Innenfläche (132) des Spalts (131) bereitgestellt wird, und
einer vierten Schicht (294), bestehend aus Polysilizium, welche durch Beschichten der Oberfläche der dritten Schicht (293) bereitgestellt wird, ausgeführt ist, wobei
durch Verändern der Filmdicke der ersten Schicht (291) und der zweiten Schicht (292), der vom obenbeschriebenen Schwingelement (124), von der ersten Schicht (261) und der zweiten Schicht (262) begildete Temperaturkoeffizient auf einen vorgegebenen Temperaturkoeffizienten eingestellt wird.

## Revendications

1. Un dispositif de mesure de pression du type vibrant pour mesurer une pression en utilisant le fait que la fréquence naturelle d'un barreau vibrant (124) varie en correspondance avec la variation de la force axiale du barreau vibrant (124), comportant :
- une enveloppe (118) présentant un espace intérieur (119),
- une partie de détecteur (120) prévue dans ledit espace intérieur (119) et comprenant :
-- un corps de support (121) fixé à une surface dudit espace intérieur (119),
-- un substrat (122) constitué en silicone et supporté par ledit corps de support (121), et
-- une partie de plaquette (123) constituée en silicone et présentant un évidement (126) à sa surface supérieure de manière à définir une membrane de détection (127), ladite partie de plaquette (123) étant fixée à une surface dudit substrat (122) de manière à former une première chambre de mesure entre ledit substrat (122) et ladite membrane de détection (127), ledit barreau vibrant (124) constitué en silicone présentant une cavité sous vide dans ladite membrane de détection (127), ledit barreau vibrant présentant une forme en H dont les quatre parties d'extrémité sont fixées à ladite membrane de détection (127),
- des moyens (140) d'application d'un champ magnétique continu prévus dans ledit espace intérieur (119), à distance de ladite membrane de détection, de manière à former une seconde chambre de mesure (145) pour appliquer un champ magnétique continu audit barreau vibrant (124), lesdits moyens (140) d'application d'un champ magnétique continu comportant :
-- un aimant permanent (142) disposé en regard dudit barreau vibrant (124) et maintenu à l'intérieur d'une culasse (143), ladite culasse (143) étant à son tour maintenue à l'intérieur d'un porte-culasse (144),
-- une entretoise (141) en forme de bague prévue autour dudit corps de support (121), dudit substrat (122) et ladite partie de plaquette (123), et espacée dudit aimant et ladite membrane de détection d'un-intervalle prédéterminé (146),
caractérisé en ce que ledit dispositif comporte au surplus :
- un corps (101) en forme de bloc présentant une chambre intérieure (102) à l'intérieur de laquelle est placée une membrane centrale (103),
- des membranes d'étanchéité (111, 112) prévues sur les surfaces latérales extérieures du corps (101) en forme de bloc et définissant avec celui-ci des première et seconde chambres d'étanchéité (113, 114), ladite membrane centrale (103) divisant ladite chambre intérieure (102) en deux première et seconde chambres centrales (104, 105) dont chacune communique avec l'une respective desdites première et seconde chambres d'étanchéité (113, 114) par l'intermédiaire de premiers orifices de communication (117),
- un deuxième orifice de communication (161) pour faire communiquer ladite première chambre de mesure (128) avec l'une (104) desdites première et seconde chambres centrales (104, 105),
- un troisième orifice de communication (162) pour faire communiquer ladite seconde chambre de mesure (145) avec l'autre (105) desdites première et seconde chambres centrales (104, 105),
- un premier liquide de charge (163) destiné à être chargé dans ladite première chambre d'étanchéité (113), l'un desdits premiers orifices de communication (117), dudit deuxième orifice de communication (161), ladite première chambre centrale (104), dudit espace intérieur (119) et de ladite première chambre de mesure (128), ledit liquide présentant une viscosité prédéterminée de manière à provoquer un amortissement en combinaison avec ledit intervalle prédéterminé (146) entre ladite membrane de détection (127) et ladite culasse (143) et à transmettre, en fonctionnement, une pression P_{L} appliquée à l'une (111) desdites membranes d'étanchéité (111, 112) à une surface de ladite membrane de détection (127),
- un second liquide de charge (164) destiné à être chargé dans ladite seconde chambre d'étanchéité (114), l'autre desdits orifices de communication (117), dudit troisième orifice de communication (162), de ladite sesonde chambre centrale (105) et de ladite seconde chambre de mesure (145), et présentant une viscosité prédéterminée pour provoquer un amortissement en combinaison avec ledit intervalle prédéterminé (146) entre ladite membrane de détection (127) et ladite culasse (143) et à transmettre une pression de mesure (P_{H}) appliquée à l'autre (112) desdites membranes d'étanchéité (111, 112) à l'autre surface de ladite membrane de détection (127).

2. Un dispositif de mesure de pression du type vibrant tel que revendiqué dans la revendication 1, caractérisé en ce qu'il comporte une surface rugueuse ou surface irrégulière (167) prévue sur la surface de paroi de ladite membrane de détection (127) ou sur la surface dudit barreau vibrant (124).

3. Un dispositif de mesure de pression du type vibrant tel que revendiqué dans la revendication 1, caractérisé en ce qu'il comporte une première couche (201) constituée d'une pellicule d'oxyde ou d'une pellicule de nitrure prévue en recouvrant la surface dudit barreau vibrant (124),
une deuxième couche (202) constituée de polysilicone présentant une surface rugueuse prévue en recouvrant la surface de ladite première couche (201),
une troisième couche (203) constituée d'une pellicule d'oxyde ou d'une pellicule de nitrure prévue en recouvrant la surface intérieure (132) dudit intervalle (131), et
une quatrième couche (204) constituée de polysilicone prévue en recouvrant la surface de ladite troisième couche (203),
une cinquième couche (205) constituée d'une pellicule d'oxyde de silicone ou d'une pellicule de nitrure de silicone prévue en recouvrant la surface extérieure d'une coquille (129), et
une sixième couche (206) constituée de polysicone prévue en recouvrant la surface de ladite cinquième couche (205, Fig. 25).

4. Un dispositif de mesure de pression du type vibrant tel que revendiqué dans la revendication 1, caractérisé en ce qu'il est équipé de :
une première couche (231) constituée d'une pelicule d'oxyde ou d'une pellicule de nitrure prévue en recouvrant la surface dudit barreau vibrant (124),
une deuxième couche (232) constituée d'un polysilicone présentant une surface rugueuse prévue en recouvrant la surface de ladite première couche (231),
une troisième couche (233) constituée d'une pellicule d'oxyde ou d'une pellicule de nitrure prévue en recouvrant la surface intérieure (132) dudit intervalle (131),
une quatrième couche (234) constituée d'un polysilicone prévue en recouvrant la surface de ladite troisième couche (233), et
une septième couche (235) constituée d'un cristal unique de silicone prévue en recouvrant la surface externe d'une coquille (129, Fig. 33)

5. Un dispositif de mesure de pression du type vibrant tel que revendiqué dans la revendication 1, caractérisé en ce qu'il équipé de
une première couche (261) constituée d'une pellicule d'oxyde ou d'une pellicule de nitrure prévue en recouvrant la surface dudit barreau vibrant (124),
une deuxième couche (262) constituée d'un polysilicone prévue en recouvrant la surface de ladite première couche (261),
une troisième couche (263) constituée d'une pellicule d'oxyde ou d'une pellicule de nitrure prévue sur la surface intérieure (132) dudit intervalle (131) et
une quatrième couche (264) constituée d'un polysilicone prévue en recouvrant la surface de ladite troisième couche (263), dans lequel :
en ajustant l'épaisseur de pellicule de ladite première couche (261) et de ladite deuxième couche (262), la tension formée par le barreau vibrant (124), la première couche (261) et la deuxième couche (262) ci-dessus décrits est ajustée à une tension prédéterminée.

6. Un dispositif de mesure de pression du type vibrant tel que revendiqué dans la revendication 1, caractérisé en ce qu'il est équipé de
une première couche (291) constituée d'une pellicule d'oxyde ou d'une pellicule de nitrure prévue en recouvrant la surface dudit barreau vibrant (124),
une deuxième couche (292) constituée de polysilicone prévue en recouvrant la surface de ladite première couche (291),
une troisième couche (293) constituée d'une pellicule d'oxyde ou d'une pellicule de nitrure prévue en recouvrant la surface intérieure (132) dudit intervalle (131) et
une quatrième couche (294) constituée de polysilicone prévue en recouvrant ladite troisième couche (293), dans lequel :
en ajustant l'épaisseur de pellicule de ladite première couche (291) et de ladite deuxième couche (292), le coefficient de température formé par le barreau vibrant (124), la première couche (291) et la deuxième couche (292) ci-dessus décrits est ajusté à un coefficient prédéterminé de température.
